# EUROPEAN PATENT SPECIFICATION

(11) **EP 1 626 362 B1**
(45) Date of publication and mention of the grant of the patent: **02.10.2013**
(21) Application number: 04723063.6
(22) Date of filing: 24.03.2004
(51) Int. Cl.: G06K 19/00, G09F 3/00

(54) **RADIO IDENTIFICATION LABEL, CREATION METHOD AND CREATION DEVICE THEREOF, RADIO IDENTIFICATION LABEL SHEET MATERIAL, AND CARTRIDGE MOUNTED ON CREATION DEVICE FOR CREATING RADIO IDENTIFICATION LABEL**
FUNKIDENTIFIKATIONSETIKETT, VERFAHREN UND VORRICHTUNG ZU DESSEN HERSTELLUNG, FLACHMATERIAL FÜR EIN FUNKIDENTIFIKATIONSETIKETT, UND KARTUSCHE, DIE AN DER HERSTELLUNGSVORRICHTUNG FÜR DIE HERSTELLUNG EINES FUNKIDENTIFIKATIONSETIKETTS ANGEBRACHT IST
ETIQUETTE D'IDENTIFICATION RADIO, PROCEDE ET DISPOSITIF DE CREATION DE CELLE-CI, MATERIAU EN FEUILLE POUR ETIQUETTE D'IDENTIFICATION RADIO ET CARTOUCHE ASSEMBLEE SUR LE DISPOSITIF DE CREATION DESTINE A LA CREATION D'ETIQUETTES D'IDENTIFICATION RADIO

(30) Priority: 01.05.2003 JP 2003126683; 01.05.2003 JP 2003126684; 01.05.2003 JP 2003126682; 01.05.2003 JP 2003126681
(43) Date of publication of application: 15.02.2006
(73) Proprietor: Brother Kogyo Kabushiki Kaisha, Nagoya-shi, Aichi 467-0841 (JP)
(72) Inventor: OHASHI, Tsuyoshi c/o BROTHER KOGYO K.K., Nagoya-shi, Aichi 467-8561 (JP); TAKI, Kazunari c/o BROTHER KOGYO K.K., Nagoya-shi, Aichi 467-8561 (JP); YASUI, Kunihiro c/o BROTHER KOGYO K.K., Nagoya-shi, Aichi 467-8561 (JP); NAGAI, Takuya c/o BROTHER KOGYO K.K., Nagoya-shi, Aichi 467-8561 (JP); TAKAHASHI, Toshio c/o BROTHER KOGYO K.K., Nagoya-shi, Aichi 467-8561 (JP); NAKAMURA, Yasunori c/o BROTHER KOGYO K.K., Nagoya-shi, Aichi 467-8561 (JP)
(74) Representative: Smith, Samuel Leonard
(86) International application number: PCT/JP2004/004120
(87) International publication number: WO 2004/097726

(56) References cited:
- WO-A-99/24934
- JP-A- 2000 076 372
- JP-A- 2002 072 886
- JP-A- 2003 006 596
- JP-A- 2003 030 615
- US-A1- 2002 130 186

## Description

This invention relates to a RFID (Radio Frequency Identification) label in which information data wirelessly sent from outside can be stored or from which information data can be wirelessly read toward the outside, a method for producing the RFID label, a device for producing the RFID label, and a cartridge that can be mounted on the producing device.
WO 99/24934 discloses a RFID smart card made up from survival layers, with an image being formed on the inside of a transparent cover that is laminated to the card.

Conventionally, a data capturing system for capturing data about articles of commerce while using RFID labels, in each of which an IC chip or the like is embedded, is known as an example of a system in which data stored in such a RFID label is wirelessly exchanged (see Patent Document 1, for example).

For example, an electromagnetic induction method is applied to the RFID label used in the data capturing system. According to this method, when the RFID label attached to an article enters a magnetic field, an electromotive force is generated in a resonance circuit as a result of electromagnetic induction, and, based on the electromotive force, radio waves are emitted.

In this system, a reflected wave returned from the RFID label is received by a receptor, and, based on the reflected wave received thereby, data pre-stored in the RFID label can be remotely read. Therefore, this system can be used for various purposes of use.

If the fact that data has once been captured from the RFID label attached to the article is stored, it is possible to, for example, sound an alarm to the effect that the article has been unlawfully taken out without capturing data. For example, a bar code is printed on the RFID label. When articles of commerce are lawfully taken out, the bar code is scanned with a scanner so as to read and gather data, and, at the same time, radio waves are emitted from a transmitter mounted on the scanner. Its internal circuit is then short-circuited or opened so as to stop the operation of an IC chip embedded in the RFID label. As a result, it becomes possible to take out only an article from which data has been gathered. However, if an article to which a RFID label has been attached and which does not have the data storage of having gathered data is taken out, the IC chip responds to radio waves sent from the transmitter, i.e., from an interrogator, and emits a reflected wave. Therefore, it is judged that the article has been unlawfully taken out, and an alarm is sounded.

If the origin of an article, the production time or shipment time thereof, the kind thereof, the price thereof, etc., are wirelessly written and prestored onto the RFID label attached to the article, consumers can remotely obtain these pieces of information about each article.

According to a conventional technique, in order to form an image on a RFID label used in the thus operated system, for example, an IC chip known as a RFID chip and a RFID antenna conductor, which are RFID circuit elements, are first embedded in a band-shaped sheet member so as to form a RFID label, and then an image of, for example, a bar code is printed onto one surface of the RFID label.
[Patent Document 1] JP Patent No. 2843437

However, when put to practical use, the RFID label has still-unsolved problems concerning the printing of identification items attached to the label and concerning the IC chip and the antenna conductor embedded in the label.

For example, in order to attach an image to the RFID label, if the image is formed after forming the RFID label including an IC chip and other elements, the image will be distorted by the influence of the concavity and convexity of an image forming surface generated by the thickness of the IC chip or the other elements, or will become unclearly blurred by contact between the image forming surface and an obj ect. Additionally, in a thermal method for forming an image by applying heat to an image forming surface, there is a possibility that, when the image is formed, heat applied to the RFID label will cause damage onto the resonance circuit and the IC chip contained in the RFID label or onto a joint part joining to the antenna conductor.

Additionally, when a sheet member used for the RFID label containing the IC chip, the antenna conductor, etc., is stored, the part of the IC chip or the antenna conductor is expanded in proportion to the thickness of the IC chip or the antenna conductor. Therefore, the sheet member has difficulty in maintaining a close contact state with another sheet member contiguous in the thickness direction when the sheet member is wound, and hence a gap or looseness will easily occur between the sheet members. If the sheet member for the RFID label is wound without reducing such a gap caused by the thickness of the IC chip or the antenna, the number of sheets that can be stored in a storage area will be lowered, and the frequency at which sheet members used for the RFID label are newly added will be heightened. If many labels are intended to be stored, the storage area will be enlarged, and hence the whole of a device for producing theRFIDlabelmustbeenlarged. Additionally, thereisapossibility that abrasion or the occurrence of static electricity caused by the friction occurring when the wound sheet members slip out of place will damage the IC chip, the antenna member, or at least one of the sheet members.

Additionally, although the RFID label is formed by arranging the IC chip and the antenna conductor connected thereto on one surface of the band-shaped sheet member, an area in which the IC chip and the other elements are disposed is partially thickened. Therefore, disadvantageously, for example, a cartridge requires a sufficient storage space for a band-shaped RFID label that is stored in a wound state like a roll and that has not yet been cut and for a short-piece-shaped RFID label that is stored in a cut state. The same applies to a label base material (sheet member) that has not yet been covered with a cover sheet.

In a RFID label producing device for producing the conventional RFID label in which the IC chip that has a RFID function and the RFID antenna conductor are embedded, the IC chip and the RFID antenna conductor each of which has a great thickness are embedded in the band-shaped sheet member, and hence the IC chip and the antenna conductor protrude from the sheet member. Therefore, the amount of protrusion of these elements is superposed when the band-shaped sheet member is wound like a roll. When this band-shaped sheet member (tag tape roll) is loaded into the device to produce a RFID label, the IC chip and the antenna conductor are pressed by a carrier roller in a label producing process. As a result, a load is imposed on the IC chip and the antenna conductor. Therefore, there is a fear that a circuit in the IC chip will be short-circuited, or a change in quality of the IC chip will bring about the loss of identification data stored in the IC chip, or the IC chip, the antenna conductor, and a joint part between the IC chip and the antenna conductor will be damaged. Additionally, there is a fear that, when the band-shaped sheet member from which an information discriminating portion that contains the antenna conductor and the IC chip protrudes is carried by the roller, the sheet member will be carried unstably and obliquely while being affected by a protruded part, or the feed speed will vary before and behind the protruded part in a process for performing a printing step on the band-shaped sheet member from which the information discriminating portion protrudes, so that printing defects, such as stains or shear in printing, occur.

Therefore, in consideration of the foregoing problems, it is a first object of the present invention to excellently maintain the state of an image printed on a RFID label used to wirelessly exchange data without damaging an IC chip and other elements embedded in the label when the label is produced. Additionally, with regard to keeping a sheet member used for the RFID label, it is a second object of the present invention to more efficiently put the sheet member without damaging the sheet member when the sheet member is loaded into a RFID label producing device. It is a third object of the present invention to provide a RFID label producing device and a cartridge each of which has no fear that a circuit in an IC chip will be short-circuited, no fear that a change in quality of the IC chip will bring about the loss or crash of identification data, or no fear that a RFID antenna conductor or a joint part between the IC chip and the antenna conductor will be damaged.

The first object indicated above may be achieved according to the principle of the present invention in claim 1. According to the RFID label producing method of Claim 1, it becomes possible to realize at least one of the fact that the IC chip and other elements included in the RFID label are not damaged and the fact that an image printed on the RFID label is kept in an excellent state. In other words, if an image is formed on the RFID label after joining the first label base material which is transparent and the second label base material including at least one (hereinafter, referred to as the "IC chip or the like") of the RFID antenna conductor and the IC chip together, there is a fear that the heat or pressure appliedwhen the image is formedwill damage the RFID antenna conductor and other elements included in the RFID label, and there is a fear that, for example, a concave and a convex generated by the IC chip or the like will appear on the surface of the RFID label, and hence the image cannot be formed in a normal manner. Therefore, as in the present invention (Claim 1), an image is formed on the first label base material that does not include the IC chip or the like before joining the first label base material and the second label base material together. Additionally, to maintain the quality of an image formed as above, when an image is formed on the first label base material, the image is formed on a surface to be joined to the second label base material of the first label base material.

The invention in claim 2 provides a RFID label wherein being produced according to the method of Claim 1. In this RFID label, an image is formed on the surface to be joined to the second label base material of the first label base material, and the image-formed surface is covered with the second label base material. According to the RFID label according to Claim 2, since no element comes into contact with the image-formed surface directly from outside, the image formed thereon can be prevented, for example, from being worn out, and the image can be kept in an excellent state.

The invention in claim 3 provides a device for producing a RFID label which put into practice the invention in claim 1. That is, for the same reason as in the invention of Claim 1, an image is formed on one side of the first label base material, i.e., on a surface to be joined to the second label base material of the first label base material by the image forming means on the conveying path before joining the first label base material and the second label base material together. According to the RFID label producing device of Claim 3, the image formed on the RFID label can be kept in an excellent state without damaging the circuit and other elements included in the RFID label.

The first label base material and the second label base material may be joined together by, for example, a means for pressing the whole of the RFID label, which is used as the joining means, more preferably, by the joining means in claim 4,which consists of a pair of rollers between which the first label base material and the second label base material are sandwiched, and the first label base material and the second label base material are joined together by rotations of each of the rollers while being conveyed. According to the RFID label producing device of Claim 4, since the first and second label base materials are joined together successively from the end of each label base material by the pair of rollers serving as the joining means, air is discharged from the inside of the RFID label formed by joining the label base materials together. Therefore, the external appearance can be prevented from being impaired by air put into the RFID label.

The present invention in claim 5 provides the device of Claim 4 wherein the first holding portion, the second holding portion, the conveying-path forming means, and one of the two rollers that constitute the joining means are disposed within a cartridge detachably attached to a main body of the RFID label producing device. According to the RFID label producing device of Claim 5, since a user of the RFID label producing device can exchange each label member held by each holding portion or can load new label members, the job of exchanging or loading the label members becomes easy.

The present invention in claim 6 provides the device of any one of Claims 3 to 5, wherein the conveying-path forming means forms a space so as not to come into contact with a range where an image can be formed on an image-formed side of the first label base material in an area ranging from a position at which an image is formed by the image forming means on the conveying path of the first label base material to a position at which the first and second label base materials a rejoined together by the joining means. That is, since the image-formed surface of the first label base material is bared until the first label base material is joined to the second label base material after an image is formed on the first label base material, the conveying-path forming means is formed so as not to come into contact with the range where the image has been formed. Accordingly, no element is brought into contact with the image-formed surface until the first label base material is joined to the second label base material after an image is formed on the first label base material. Therefore, according to the RFID label producing device of Claim 6, since no element is brought into contact with the image-formed surface until the first label base material is joined to the second label base material after an image is formed on the first label base material, the image formed thereon can be kept in an excellent state.

The present invention provides a cartridge used for a RFID label according to claim 13. Since the cartridge is structured in this way, each label base material can be easily carried, and an image can be formed on the surface to be joined to the second label base material of the first label base material when the cartridge is used by being attached to the main body of the RFID label producing device.. Therefore, according to the cartridge of Claim 13, as mentioned above, each label base material can be easily carried, and an image can be formed on the surface to be joined to the second label base material of the first label base material when the cartridge is used by being attached to the main body of the RFID label producing device, and hence it becomes possible to realize at least one of the fact that the IC chip and other elements included in the RFID label are not damaged and the fact that an image printed on the RFID label is kept in an excellent state.

The invention in claim 14 provides the cartridge of Claim 13, wherein the conveying-path forming means forms a space so as not to come into contact with a range where an image can be formed on an image-formed side of the first label base material in an area ranging from a position at which an image is formed by the image forming means on the conveying path of the first label base material to the joining part. According to the cartridge of Claim 14, as in the invention of Claim 6, no element is brought into contact with the image-formed surface until the first label base material is joined to the second label base material after an image is formed on the first label base material, and hence the image formed thereon can be kept in an excellent state.

The fourth object indicated above may be achieved according to the principle of the present invention in claim 7, which provides a device for producing a RFID label, the device comprising: an image forming means for forming an image on an image-formed object; and a conveying means for joining a sheet member having an information discriminating portion capable of discriminating information by radio and the.image-formed object on which an image has been formed by the image forming means together while conveying the sheet member, wherein a pressure absorbing means for absorbing a pressing force exerted on the information discriminating portion of the sheet member is formed on a contact surface of the conveying means with which the sheet member is brought into contact. According to the invention of Claim 7, the pressure absorbing means for absorbing a pressing force exerted on the information discriminating portion of the sheet member is formed on a contact surface of the conveying means with which the sheet member is brought into contact, and an excessive pressing force is never exerted on the information discriminating portion. Therefore, a circuit in the information discriminating portion is not short-circuited, and there is no fear that a change in quality of the information discriminating portion caused by pressure against the information discriminating portion will bring about the loss or crash of identification data stored in the information discriminating portion, and that the information discriminating portion will be destroyed.

The invention in claim 8 provides the device of Claim 7, wherein the conveying means comprises a pair of rollers, and the pressure absorbing means is a plurality of concave parts formed in a roller surface of at least one of the pair of rollers over an entire periphery of the roller. According to the invention of Claim 8, since the plurality of concave parts by which a pressing force against the information discriminating portion of the sheet member is absorbed are formed in a roller surface of at least one of the pair of rollers, the information discriminating portion never comes into contact with the roller surface, and an excessive pressing force is not exerted on the information discriminating portions. Therefore, advantageously, a circuit in the information discriminating portion is not short-circuited, and there is no fear that a change in quality of the information discriminating portion caused by pressure against the information discriminating portion will bring about the loss or crash of identification data stored in the information discriminating portion, and that the information discriminating portion will be destroyed.

The invention in claim 9 provides the device of Claim 7, wherein the conveying means comprises a pair of rollers, and the pressure absorbing means is an elastic body disposed on a roller surface of at least one of the pair of rollers, the elastic body being elastically deformable in accordance with the shape of a swell of a sheet surface of the sheet member. According to the invention of Claim 9, since the elastic body elastically deformable in accordance with the shape of a swell of the sheet surface of the sheet member is formed on the roller surface of at least one of the pair of rollers, a pressing force is absorbed by the elastic body that is deformed by being pressed by the information discriminating portion, and an excessive pressing force is never exerted on the information discriminating portion. Therefore, advantageously, a circuit in the information discriminating portion is not short-circuited, and there is no fear that a change in quality of the information discriminating portion caused by pressure against the information discriminating portion will bring about the loss or crash of identification data stored in the information discriminating portion, and that the information discriminating portion will be destroyed.

The invention in claim 10 provides the device of Claim 8 or Claim 9, wherein the pair of rollers are disposed at a discharge portion from which the band-shaped sheet member is discharged outwardly. According to the invention of Claim 10, since the RFID label has its maximum thickness when the RFID label is finallyproduced and when the pair of rollers discharge the RFID label outwardly, the pair of rollers are disposed at the discharge portion from which the RFID label is dischargedoutwardly. Therefore, with even greater effect, identification data can be prevented from being lost by a change in quality of the information discriminating portion included in the RFID label having a maximum thickness, and the information discriminating portion can be prevented from being destroyed.

The invention in claim 11 or 12 provides the device of any one of Claims 7 to 10, wherein the image forming means is a thermal head that forms an image on the image-formed object with heat or an ink jet head that forms an image on the image-formed object by discharging ink. According to the invention of Claim 11 or Claim 12, the RFID label producing device that uses either a thermal head or an ink jet head as the image forming means never has a printing problem caused by a swell or projection of the information discriminating portion, and can excellently perform printing.

The invention in claim 15 provides a cartridge comprising: a holding portion that holds a sheet member having an information discriminating portion capable of discriminating information by radio and the image-formed object in a state in which each of the sheet member and the image-formed object is wound like a roll respectively; a conveying path to convey the sheet member and the image-formed obj ect along mutually different paths from the holding portion to a stack position at which the sheet member and the image-formed object are stacked together; an insertion hole formed in the conveying path of the image-formed object, the insertion hole used to insert the image forming means provided on the side of the RFID label producing device; and a roller disposed at the stack position on the side of an end of the conveying path, the roller stacking the sheet member and the image-formed obj ect together while conveying the sheet member and the image-formed object in cooperation with a roller provided in the RFID label producing device, wherein formed is a pressure absorbing means for absorbing a pressing force exerted on the information discriminating portion of the sheet member on a roller surface of the roller. According to the invention. of Claim 15, when a RFID label is produced by detachably attaching the cartridge for RFID labels having the pressure absorbing means for absorbing a pressing force exerted on the information discriminating portion of the sheet member formed on the roller surface of the roller to the RFID label producing device, an excessive pressing force is never exerted on the information discriminating portion because the pressure absorbingmeans for absorbing a pressing force exerted on the information discriminating portion of the sheet member is formed on the contact surface of the conveying means with which the sheet member is brought into contact. Therefore, advantageously, a circuit in the information discriminating portion is not short-circuited, and there is no fear that a change in quality of the information discriminating portion caused by pressure against the information discriminating portion will bring about the loss or crash of identification data stored in the information discriminating portion, and that the information discriminating portion will be destroyed.

The invention in claim 16 provides the cartridge of Claim 15, wherein the pressure absorbingmeans comprises a plurality of concave parts formed in the roller over an entire periphery of the roller surface of the roller. As in the invention of Claim 15, according to the invention of Claim 16, since the plurality of concave parts by which a pressing force exerted on the information discriminating portion of the sheet member is absorbed are formed in the roller surface of at least one of the pair of rollers, the information discriminating portion never comes into contact with the roller surface, and an excessive pressing force is never exerted on the information discriminating portion. Therefore, advantageously, a circuit in the information discriminating portion is not short-circuited, and there is no possibility that a change in quality of the information discriminating portion caused by pressure against the information discriminating portion will bring about the loss or crash of identification data stored in the information discriminating portion, and that the information discriminating portion will be destroyed.

The invention in claim 17 provides the cartridge of Claim 15, wherein the pressure absorbing means comprises an elastic body that is elastically deformed in accordance with the shape of a swell of a sheet surface of the sheet member. As in the invention of Claim 15, according to the invention of Claim 17, since the elastic body that is elastically deformable in accordance with the shape of a swell or projection of the sheet surface of the sheet member is used as the pressure absorbing means, an pressing force is absorbed by allowing the information discriminating portion to press the elastic body, and an excessive pressing force is never exerted on the information discriminating portion. Therefore, advantageously, a circuit in the information discriminating portion is not short-circuited, and there is no possibility that a change in quality of the information discriminating portion caused by pressure against the information discriminating portion will bring about the loss or crash of identification data stored in the information discriminating portion, and that the information discriminating portion will be destroyed.
The invention will now be further described, by way of example, with reference to the accompanying drawings, in which:

FIG. 1 is an overall view of a device for producing a RFID label.
FIG. 2 depicts a cartridge and a thermal printing mechanism part by opening a cover case of the RFID label producing device of FIG. 1, in which an upper surface wall of the cartridge is cut to show the inside of the cartridge.
FIG. 3 is a block diagram showing an electric connection of the RFID label producing device of FIG. 1.
FIGS. 4A to 4C are sectional side views, each showing a RFID label and a band-shaped sheet member serving as a base material of the label, FIG. 4A showing a state in which a laminate film has not yet been bonded, FIG. 4B showing a state in which the laminate film is about to be bonded, FIG. 4C showing a state in which the laminate film has been bonded.
FIGS. 5A and 5B are sectional side views showing a cross section in a longitudinal direction of the band-shaped sheet member of FIGS. 4A to 4C and explaining the cross section of the band-shaped sheet member wound and stacked like a roll.
FIG. 6 is a perspective view showing a state in which one end of the band-shaped sheet member wound like a roll has been drawn out.
FIGS. 7A to 7B are sectional side views showing a RFID label and a sheet member of another embodiment, FIG. 7A showing an example of the RFID label using a laminate film that has a thermosensitive layer, FIG. 7B showing an example of the sheet member in which an IC chip and an antenna conductor are disposed inversely in upward and downward directions.
FIGS. 8A and 8B are sectional views, each showing a band-shaped sheet member of another embodiment in which an IC chip and an antenna conductor are provided between a base-material tape and a second adhesive layer, FIG. 8A showing an example in which the IC chip is disposed on the side of the second adhesive layer, and the antenna conductor is disposed on the side of the base-material tape, FIG. 8B showing an example in which the antenna conductor is disposed on the side of the second adhesive layer, and the IC chip is disposed on the side of the base-material tape.
FIGS. 9A and 9B are sectional views, each showing a sheet member in which a base-material tape is not provided between a first adhesive layer and a second adhesive layer, FIG. 9A showing an example in which the IC chip is disposed on the side of the second adhesive layer, and the antenna conductor is disposed on the side of the first adhesive layer, FIG. 9B showing an example in which the antenna conductor is disposed on the side of the second adhesive layer, and the IC chip is disposed on the side of the first adhesive layer.

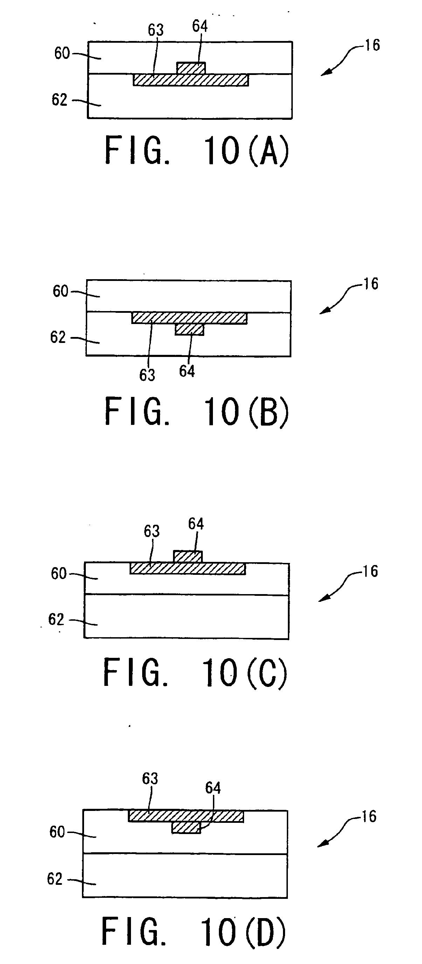

FIGS. 10A, 10B, 10C, and 10D are sectional views, each showing a sheet member that includes an adhesive layer and a separation member, FIG. 10A showing an example in which the IC chip is disposed on the side of the adhesive layer, and the antenna conductor is disposed on the side of the separation member, FIG. 10B showing an example in which the antenna conductor is disposed on the side of the adhesive layer, and the IC chip is disposed on the side of the separation member, FIG. 10C showing an example in which the IC chip and the antenna conductor are stuck onto a surface of the adhesive layer opposite the separation member so that the antenna conductor faces the separation member, FIG. 10D showing an example in which the IC chip is stuck onto a surface opposite the separation member which the adhesive layer and separation member face each other.
FIG. 11 is a perspective view showing rectangular or square RFID labels or sheet members that are stacked one by one and are contained in a box.
FIGS. 12A, 12B, 12C, and 12D show a band-shaped sheet member of another embodiment being extended by drawing an end of the sheet member, FIG. 12A being a perspective view showing an arrangement pattern of an information discriminating portion, FIGS. 12B to 12D being schematic plan views, each showing an example of another arrangement pattern.
FIG. 13 is a sectional view of the band-shaped sheet member of FIG. 12A wound like a roll in a radial direction R of the roll.
FIG. 14 is a view for explaining a band-shaped sheet member of another embodiment, corresponding to FIG. 12A.
FIG. 15 is a view for explaining a band-shaped sheet member of another embodiment, corresponding to FIG. 12A.
FIG. 16 is a view for explaining a band-shaped sheet member of another embodiment, corresponding to FIG. 12A.
FIG.. 17 is a perspective view showing a state in which rectangular holding sheet members of another embodiment are stacked up.
FIG. 18 is a perspective view showing a state in which circular holding sheet members of another embodiment are stacked up.
FIG. 19 is a perspective view for explaining a conventional band-shaped sheet member.
FIG. 20 is a view for explaining a band-shaped sheet member of another embodiment, corresponding to FIG. 12A.
FIG. 21 is a perspective view showing a carrier roller used to convey the band-shaped sheet member of FIG. 20.
FIG. 22 is a perspective view showing a carrier roller of another embodiment, corresponding to FIG. 21.
FIG. 23 is a perspective view showing a band-shaped sheet member that is conveyed by the carrier roller of FIG. 22.

A RFID label producing device 1 and other components according to an embodiment of the present invention will be hereinafter described in detail with reference to the attached drawings.

### <First Embodiment>

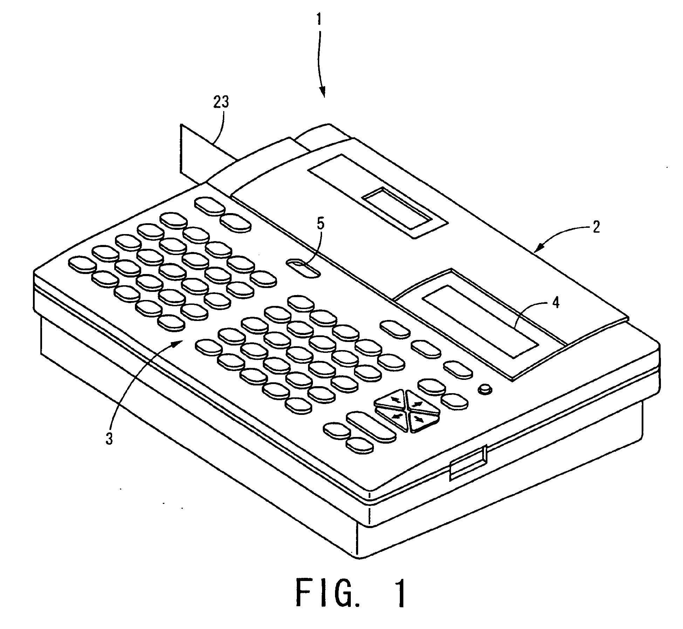

FIG. 1 is a perspective view showing the whole of a RFID label producing device 1 for producing a RFID label 70 called a RFID tag, for example.

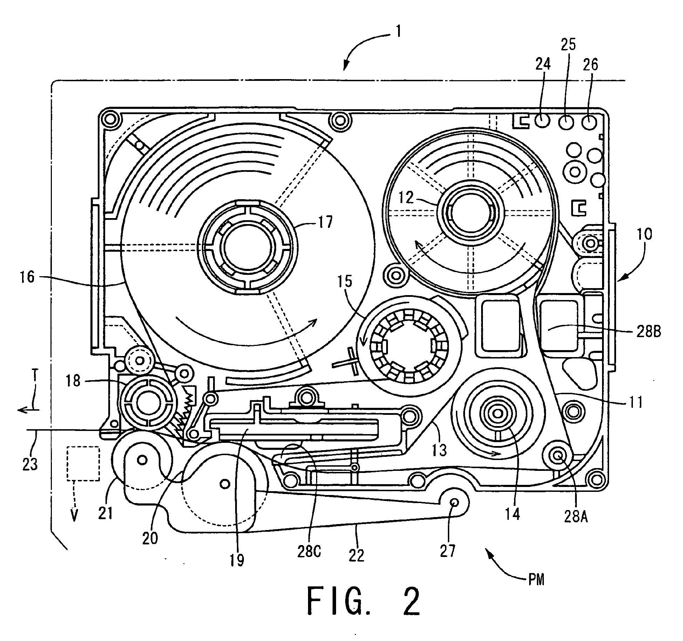

In FIG. 1, a keyboard 3 is disposed at the front part of the RFID label producing device 1. A thermal printing mechanism PM (see FIG. 2) corresponding to an image forming means of the present invention is disposed inside the RFID label producing device 1 and behind the keyboard 3. A cover case 2 that can be opened and closed to exchange a cartridge 10 shown in FIG. 2 is disposed behind the keyboard 3. The cover case 2 has a display 4, such as a liquid crystal display (LCD), on which characters or symbols input by the keyboard 3 are displayed. An operating knob 5 that is operated to open the cover case 2 is disposed between the cover case 2 and the keyboard 3.

The keyboard 3 has character keys used to input alphabetical letters, numerals, and marks, space keys, end-of-line keys, cursor moving keys used to move a cursor from right to left or up and down, typical-label producing keys used to easily produce a label that is produced with great frequency, editing keys, such as execution keys and cancel keys, print keys used to command printing, power keys used to turn a power source on or off, etc.

FIG. 2 is an enlarged view of the cartridge 10 and the thermal printing mechanism PM that appear by opening the cover case 2. The inside of the cartridge 10 is shown by removing its upper surface wall.

In FIG. 2, the cartridge 10 shaped like a rectangular box is detachably attached to the RFID label producing device 1. The cartridge 10 includes, for example, a tape spool 12 on which a laminate tape 11, which is a transparent resin film or a translucent colored resin film made of PET (polyethylene terephthalate), is wound like a roll, a ribbon spool 14 on which an ink ribbon 13 is wound, a ribbon take-up spool 15 that takes up the ink ribbon 13, a feed spool 17 on which a band-shaped sheet member 16, which is substantially the same in width as the laminate tape 11 and which has an antenna conductor 63, an IC chip 64, a resonance circuit, etc., is wound like a roll, and a tape feed roller 18 and a sub-roller 21 that are used as a pair and that press or nip the laminate tape 11 and the band-shaped sheet member 16 between the tape feed roller 18 and the sub-roller 21 so as to cause them to adhere to each other. The tape spool 12, the ribbon spool 14, the ribbon take-up spool 15, the feed spool 17, the tape feed roller 18, and the sub-roller 21 are rotatably provided.

In this embodiment, the laminate tape 11 functions as a first label base material, the band-shaped sheet member 16 functions as a second label base material, the tape spool 12 functions as a first holding portion, the feed spool 17 functions as a second holding portion, and the tape feed roller 18 and the sub-roller 21, which are used as a pair, function as a conveying means or an adhering means.

The cartridge 10 is provided with a guide roller 28A and guide walls 28B and 28C that correspond to a conveying-path forming means for forming a conveying path used to convey a tape from the tape spool 12 of the laminate tape 11 to the tape feed roller 18. The laminate tape 11 is conveyed to the position of the tape feed roller 18 without coming into contact with the band-shaped sheet member 16 while following a course regulated by the guide roller 28A and the guide walls 28B and 28C.

The ribbon spool 14 and the ribbon take-up spool 15 are disposed on the back side of the laminate tape 11, i.e., on the side where the laminate tape 11 is adhered to the band-shaped sheet member 16. Accordingly, the laminate tape 11 and the ink ribbon 13 are superposed on each other and are sandwiched between a rotatable platen 20 and a thermal head 19 erected on the body of the RFID label producing device 1.

The platen 20 and the sub-roller 21 are rotatably supported by a roller supporter 22, and a bias is given toward the thermal head 19 and the sub-roller 21 when the RFID label 70 is produced. The band-shaped sheet member 16 and the laminate tape 11 contained in the cartridge 10 are rotated while being held between the sub-roller 21 and the tape feed roller 18, so that the sub-roller 21 feeds the tape while allowing the laminate tape 11 and the band-shaped sheet member 16 to adhere to each other.

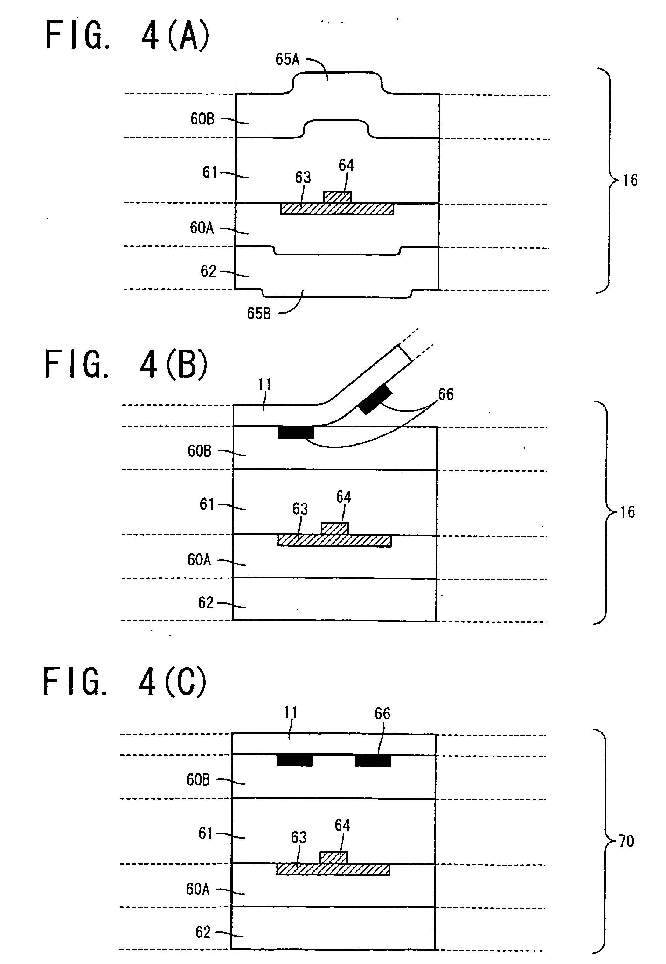

When the cartridge 10 is detached, the roller supporter 22 is rotated on a supporting shaft 27, and the platen 20 and the sub-roller 21 supported by the roller supporter 22 recede from the cartridge 10. When the RFID label 70 shown in FIG. 4C is produced after the cartridge 10 is attached, the platen 20 and the sub-roller 21 are urged toward the cartridge 10, and are brought into contact with the cartridge 10, i.e., reach the state of FIG. 2.

Therefore, when the elements contained in the cartridge 10, i.e., the laminate tape 11, the band-shaped sheet member 16, and the ink ribbon 13 run out, or when the width or kind of the tape is changed, such a replenishment or change can be easily made by allowing a user of the RFID label producing device 1 to exchange the cartridge 10.

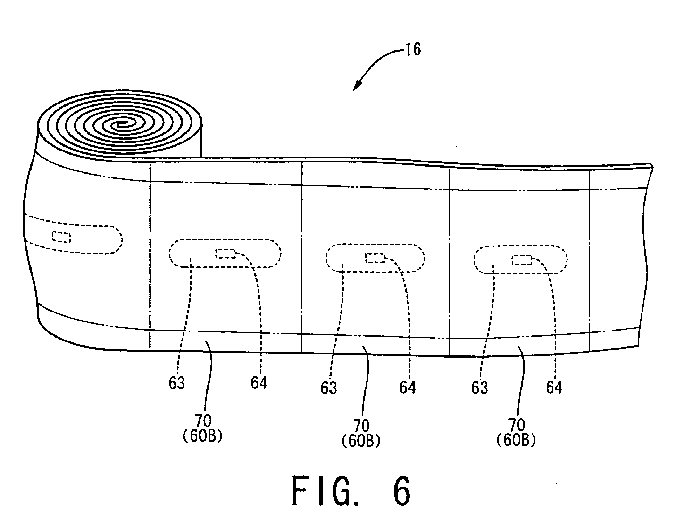

The thermal head 19 has a plurality of heater elements, e.g., 128 heater elements (not shown) arranged in the upward and downward directions, i.e., in the width direction of the laminate tape 11. A range where an image can be formed by the thermal head 19 is determined in accordance with the tape width of the laminate tape 11. For example, this range is a part corresponding to the width dimension of the laminate tape 11 that is stuck in an area specified between two alternate-long-and-two-short-dashes lines shown in FIG. 6.

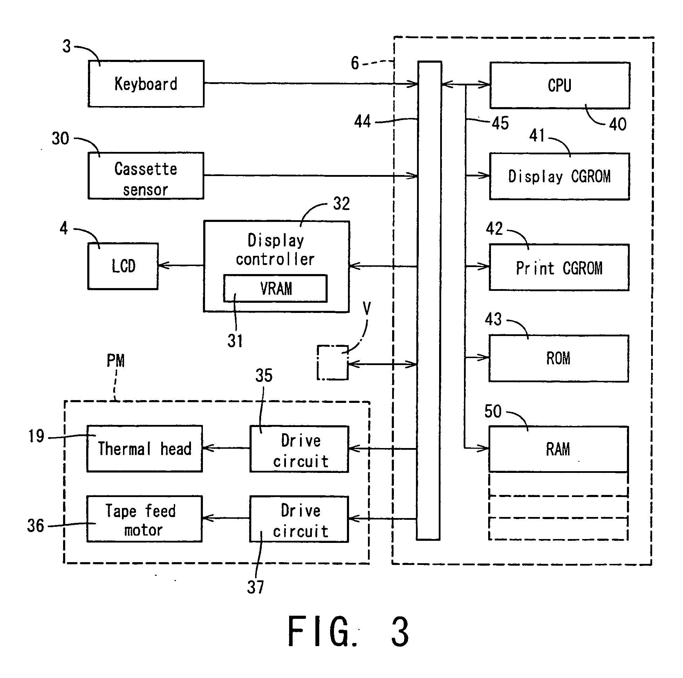

When the RFID label 70 is produced, a tape feed motor 36 (see FIG. 3) is first driven in a predetermined rotational direction by driving the RFID label producing device 1. Thereafter, the tape feed roller 18 and the ribbon take-up spool 15 are synchronously driven in a predetermined winding rotational direction through a gear mechanism (not shown) by driving the tape feed motor 36 in this way. The rotational direction of the ribbon take-up spool 15 is shown by the arrow of FIG. 2.

The heater elements of the thermal head 19 are energized in accordance with the conveyance of the laminate tape 11, and characters and marks (including bar codes) are printed on the back surface of the laminate tape 11 by a plurality of dot arrays printed by the heater elements. Thereafter, the band-shaped sheet member 16 is adhered to the back surface of the laminate tape 11, so that a RFID label 23 extending like a tape is produced. The RFID label 23 is then sent in a tape feed direction T, and is discharged out of the RFID label producing device 1 as shown in FIG. 1 and FIG. 2. The RFID label 23 is then cut into RFID labels 70 by a cutter (not shown). Since the details of the thermal printing mechanism PM are known from a conventional technique (see Japanese Published Unexamined Patent Application No. H2-106555, for example), a description of this mechanism is omitted here.

The laminate tape 11 wound on the tape spool 12 that has a predetermined tape width or spool width (for example, one of five kinds of widths 6mm, 9mm, 12mm, 18mm, and 24mm) is beforehand placed in the cartridge 10. Three detection holes 24, 25, and 26 are formed in the bottom wall of the cartridge 10. The detection holes 24, 25, and 26 are closed according to different combinations of the detection holes so that the tape width, which is one of the five kinds, can be detected. A cassette sensor 30 (see FIG. 3), which outputs tape cassette information by detecting the width or kind of the tape from a combination of the detection holes 24, 25, and 26 any one of which is open or closed, is attached to a part of the RFID label producing device 1 supporting the lower side of the cartridge 10.

Next, an electric structure of the RFID label producing device 1 will be described with reference to the block diagram of FIG. 3.

A control unit 6 is made up of a CPU 40, an input-output interface 44 connected to the CPU 40 through a bus 45, such as a data bus, a display character generator ROM (a display CG-ROM) 41, a print character generator ROM (a print CG-ROM) 42, a ROM 43, and a RAM 50. Display dot pattern data of predetermined character sizes concerning each of many characters, such as alphabetical letters and marks, is stored in the display CG-ROM 41. Print dot pattern data concerning each of many characters, such as alphabetical letters and marks, is stored in the print CG-ROM 42, including a plurality of print character sizes in correspondence with code data for each font.

The keyboard 3, the cassette sensor 30, a display controller 32 including a video RAM (VRAM) 31 used to output display data to the display 4, a drive circuit 35 that drives the thermal head 19, and a drive circuit 37 that drives the tape feed motor 36 are connected to the input-output interface 44 of the control unit 6.

A display drive control program that controls the display controller 32 in accordance with code data about characters, such as letters, numerals, and marks, input from the keyboard 3, a print drive control program that gives printing instructions to sequentially transfer dot pattern data for each one-dot array for printing to the thermal head 19 or to the tape feed motor 36, and a control program for text input control, typical-label production control, label name selection control, typical-label data input control, text registration control, or bar code production control are stored in the ROM 43 of the control unit 6.

The CPU 40 allows the display 4 to show an image while sequentially reading data from the CG-ROMs 41 and 42 based on the input from the keyboard 3, the detection of the kind of the cartridge 10 by the cassette sensor 30, and the control programs stored in the ROM 43. The CPU 40 further gives instructions to drive the tape feed motor and to control the thermal head 19 through the drive circuits 35 and 37.

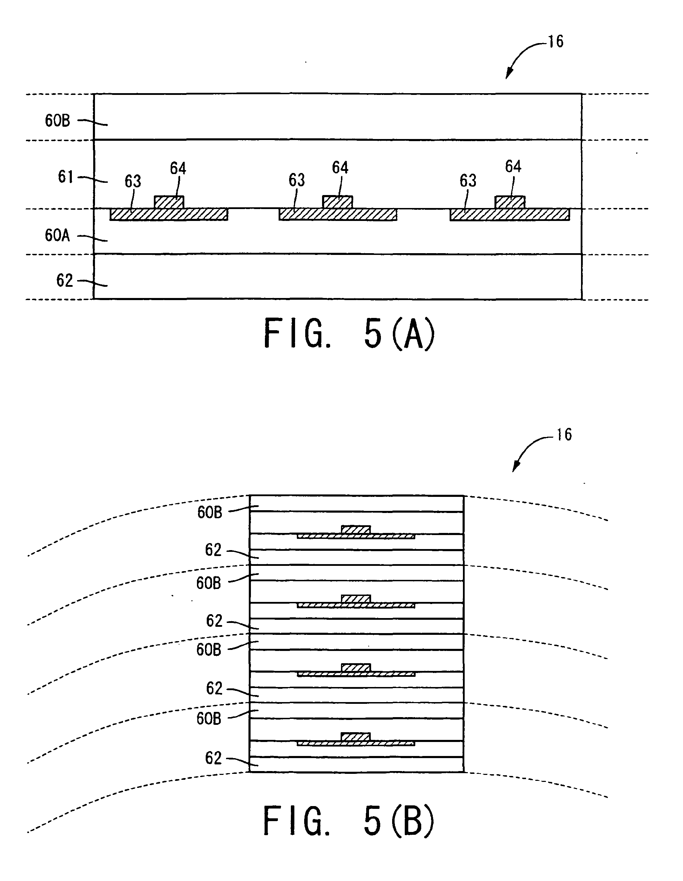

Next, referring to FIGS. 4A to 4C and FIGS. 5A and 5B, a layered structure of the band-shaped sheet member 16 contained in the cartridge 10 will be described. FIGS. 4A to 4C and FIGS. 5A and 5B are sectional side views that schematically show the band-shaped sheet member 16. In other words, FIGS. 4A to 4C and FIGS. 5A and 5B are longitudinal sectional views along the longitudinal direction of the band-shaped sheet member 16 and through the middle in the width direction of the band-shaped sheet member 16. FIGS. 4A to 4C and FIG. 5A are views obtained by enlarging one sheet of the band-shaped sheet member 16 or one piece of the RFID label 70 in the thickness direction. FIG. 5B is a view obtained by enlarging a part of the band-shaped sheet member 16 wound like a roll in the thickness direction, i.e., in the radial direction of the roll.

As shown in FIG. 4A, the band-shaped sheet member 16 has a layered structure consisting of four layers, i.e., a separation member 62, such as a silicon-applied sheet of paper or a silicon-impregnated sheet of paper, a first adhesive layer 60A, an opaque base-material tape 61, such as a colored resin sheet, and a second adhesive layer 60B stacked in this order. An antenna conductor 63 used to function as a RFID label of an electromagnetic induction type and an IC (RFID) chip 64 connected to the antenna conductor 63 are interposed between the first adhesive layer 60A and the base-material tape 61. Therefore, the band-shaped sheet member 16 is partially thickened in proportion to the thickness of the antenna conductor 63 and the IC chip 64 interposed therebetween. As a result, convex parts 65A and 65B are formed on the upper and lower surfaces, respectively. For convenience, the convex parts 65A and 65B of the band-shaped sheet member 16 are omitted in the longitudinal sectional views of the band-shaped sheet member 16 shown in FIG. 4B and in the other figures subsequent to FIG. 4B. No trouble occurs in adhesion between the band-shaped sheet member 16 and the laminate tape 11 even if the convex parts 65A and 65B are formed.

The antenna conductor 63 and the IC chip 64 are electrically connected together by a connection part (not shown) so as to fulfill a predetermined RFID function. As shown in FIG. 5A, the antenna conductor 63 and the IC chip 64 are placed in the band-shaped sheet member 16 at regular intervals each of which corresponds to one piece in the longitudinal direction of the band-shaped sheet member 16 so that a plurality of RFID labels 70 can be sequentially produced.

When the band-shaped sheet member 16 is adhered to the laminate tape 11 at the following step, ink 66, which is a part of the ink ribbon 13, is stuck by local heating according to a predetermined pattern as shown in FIG. 4B. The second adhesive layer 60B and the laminate tape 11 on which an image, such as a mark, is formed with the ink 66 are nipped between the tape feed roller 18 and the sub-roller 21, which are used as a pair, and are joined together while being adjusted in the width direction by the guide wall 28C and the other elements. FIG. 4C shows a RFID label 70 in which the laminate tape 11 and the second adhesive layer 60B are joined together in this way. In this state, a surface of the laminate tape 11 onto which the ink 66 has adhered is covered with the laminate tape 11, and is positioned in the inner layer of the RFID label 70, and hence is never touched directly from the outside.

The thus formed band-shaped sheet member 16 is wound like a roll, and is contained in the cartridge 10. FIG. 5B schematically shows this state. In this state, the band-shaped sheet member 16 is in layers. Since both surfaces of the separation member 62 have undergone silicon processing, the band-shaped sheet member 16 can be appropriately unrolled as shown in FIG. 6 in spite of being in layers. When an end of the band-shaped sheet member 16 wound like a roll and being in layers as shown in FIG. 5B is drawn out, the second adhesive layer 60B is easily separated from another separation member 62 of the band-shaped sheet member 16 contiguous in the thickness direction while the band-shaped sheet member 16 is being continuously unrolled. Thereafter, the second adhesive layer 60B is joined to the back surface of the laminate tape 11, so that a RFID label 70 is formed.

When this RFID label 70 is stuck onto an article or the like, the separation member 62 is peeled off, and the adhesive force of the first adhesive layer 60A enables the adhesion therebetween. In the RFID label 70 stuck onto the article, the base-material tape 61 opaqued by, for example, coloring makes it impossible to visually check the antenna conductor 63 and the IC chip 64, and hence an image with the ink 66 can be easily seen.

Both surfaces of the separationmember 62 have undergone silicon processing as mentioned above, and the adhesive force between the first adhesive layer 60A and the base-material tape 61 is set to be sufficiently greater than that between the separation member 62 and the first adhesive layer 60A. Therefore, the first adhesive layer 60A and the base-material tape 61 are never separated from each other when the separation member 62 is separated therefrom. Likewise, the adhesive force between the separation member 62 and the first adhesive layer 60A is set to be greater than that between the secondadhesive layer 60B and the separationmember 62. Therefore, the separation member 62 and the first adhesive layer 60A are never separated from each other when the band-shaped sheet member 16 in a wound state is unrolled. When the band-shaped sheet member 16 is wound, the band-shaped sheet member 16 may undergo pressure from the outside so that adjacent layers of the band-shaped sheet member 16 wound to have a layered structure come into close contact with each other, or the band-shaped sheet member 16 may use its own weight so that the adjacent layers thereof come into close contact with each other.

Outside the cartridge 10, the RFID label 70 formed in this way is sequentially cut into each individual RFID label 70 (see FIG. 4C) having a usable form by a cutting mechanism (not shown) provided in the RFID label producing device 1 along the alternate-long-and-short-dash line of FIG. 6 at intervals in each of which the antenna conductor 63 and the IC chip 64 are disposed.

As described above, in the RFID label producing device 1 of this embodiment, an image is formed on the laminate tape 11 that does not include the IC chip 64 before joining the laminate tape 11 and the band-shaped sheet member 16 together. To maintain the quality of an image that is formed on the laminate tape 11, the image is formed on the back surface of the laminate tape 11 to which the band-shaped sheet member 16 is joined. Therefore, the image printed on the RFID label can be kept in an excellent state without damaging the IC chip 64 and the other elements included therein.

Additionally, in the RFID label producing device 1 of this embodiment, the tape feed roller 18 and the sub-roller 21 between which the laminate tape 11 and the band-shaped sheet member 16 are sandwiched are disposed. The laminate tape 11 and the band-shaped sheet member 16 are adhered to each other while being conveyed by rotating these rollers, so that each label base material can be joined sequentially from the end thereof. Therefore, advantageously, the RFID label 70 can be prevented from being permeated with air by which the outward appearance of the label is impaired.

Additionally, in the RFID label producing device 1 of this embodiment, the laminate tape 11 and the band-shaped sheet member 16 are joined together by the tape feed roller 18 and the sub-roller 21. Therefore, there is no need to newly provide a carrier roller, or the like, that is used to convey each label base material. This makes it possible to simplify the structure and to reduce production costs.

Additionally, in this embodiment, since the tape spool 12, the feed spool 17, the guide roller 28A, the guide walls 28B and 28C, and one of the two rollers 18 and 21 that constitute an adhering means are disposed in the cartridge detachably attached to the RFID label producing device 1, a user of the RFID label producing device 1 can easily perform the job of exchanging or substituting each label member held by each holding portion.

Additionally, in this embodiment, the back surface of the laminate tape 11 on which an image is formed is exposed until the laminate tape 11 is joined to the band-shaped sheet member 16 after the image is formed thereon. However, the carrier members, such as the guide roller 28A and the guide walls 28B and 28C, never come into contact with the area in which the image of the laminate tape 11 is formed, and hence the formed image can be kept in a more excellent state.

Additionally, each label base material can be easily carried by using the cartridge 10 of this embodiment. Since an image is formed on the back surface of the laminate tape 11, to which the band-shaped sheet member 16 is joined, by attaching the cartridge 10 to the RFID label producing device 1, the image printed on the RFID label 70 can be kept in an excellent state without damaging the IC chip 64 and the other elements included therein. In particular, when a bar code is imaged with the ink 66, no distortion occurs in the image of the bar code without exerting a bad influence on the readout of the bar code.

Additionally, the use of the RFID label producing device 1 of this embodiment makes it easy to stop the operation of producing the RFID label 70 whenever one sheet of the RFID label 70 is produced. Therefore, it is possible to easily produce RFID labels 70 each of which has an image differing from the others.

Additionally, in the RFID label 70 of this embodiment, an image is formed on a surface of the laminate tape 11 to which the sheet member 16 is joined, and the surface on which the image is formed can never be touched directly from the outside. Therefore, the image formed thereon can be protected from becoming blurred, and the image can be kept in an excellent state.

Additionally, in the RFID label 70 of this embodiment, the base-material tape 61 is opaque. Therefore, the antenna conductor 63 and the IC chip 64 do not disturb the perception of an image formed with the ink 66. In particular, in a bar code, a bad influence is not exerted on accuracy in reading the bar code.

Additionally, in the band-shaped sheet member 16 of this embodiment, the separation member 62, which is placed in an outer layer of the band-shaped sheet member 16 being in layers, is brought into contact with the second adhesive layer 60B, which is placed in an inner layer than the layer of the separation member 62 and which is adjacent to the separation member 62, as shown in FIG. 5B. The band-shaped sheet member 16 is wound so that the separation member 62 and the second adhesive layer 60B adjoining each other are further adhered to each other. Therefore, the band-shaped sheet member 16 wound like a roll never slips out of place in the width direction. Thus, the band-shaped sheet member 16 does not wear down by friction occurring when the band-shaped sheet member 16 is unrolled or loosened, and the IC chip 64 can be prevented from being damaged by the generation of static electricity.

Additionally, in this embodiment, since the band-shaped sheet member 16 wound as in FIG. 5B has layers that are pressed against each other and are in close contact with each other, the band-shaped sheet member 16 can be made compact when the band-shaped sheet member 16 is loaded into the RFID label producing device 1. In other words, the band-shaped sheet member 16 can be more efficiently contained therein.

Additionally, in this embodiment, since the band-shaped sheet member 16 is wound in a state in which a plurality of antenna conductors 63 and IC chips 64 are contained in the first adhesive layer 60A, a plurality of RFID labels 70 can be sequentially produced from one sheet of the band-shaped sheet member 16.

Additionally, in this embodiment, since the antenna conductor 63 and the IC chip 64 are disposed between the first adhesive layer 60A and the second adhesive layer 60B, the adhesive layers 60A and 60B can protect the antenna conductor 63 and the IC chip 64 against an external force such as a shock.

Additionally, in this embodiment, since the base-material tape 61 harder than the adhesive layers 60A and 60B is disposed between the first adhesive layer 60A and the second adhesive layer 60B, the band-shaped sheet member 16 is not easily deformed even when an external force, such as compression, is applied onto the band-shaped sheet member 16.

Additionally, in this embodiment, the antenna conductor 63 and the IC chip 64 are disposed between the opaque base-material tape 61 and the first adhesive layer 60A. Therefore, when the laminate tape 11 with an image formed facing the second adhesive layer 60B is stuck, the image formed on the surface of the laminate tape 11 can be improved in visibility without allowing the antenna conductor 63 and the IC chip 64 to be seen. In particular, when a bar code is imaged with the ink 66, the image of the bar code can be advantageously prevented from being overlapped with the antenna conductor 63 and the IC chip 64 and from making a mistake in reading the bar code.

Additionally, in this embodiment, the first adhesive layer 60A is used to fix the band-shaped sheet member 16 to other objects, such as articles of commerce, whereas the second adhesive layer 60B is used to join the band-shaped sheet member 16 and a sheet-like member having the same width as the band-shaped sheet member 16 together while adjusting them in the width direction. When the band-shaped sheet member 16 is fixed to an object, only the separation member 62 is separated from the band-shaped sheet member 16. Therefore, the band-shaped sheet member 16 is prevented from being damaged. The band-shaped sheet member 16 can be more efficiently loaded into the RFID label producing device 1, and can be reliably fixed to an object.

Additionally, in this embodiment, the band-shaped sheet member 16 is contained in the cartridge 10. attachable to the RFID label producing device 1. Therefore, when the band-shaped sheet member 16 is loaded into the RFID label producing device 1, the band-shaped sheet member 16 can be more efficiently contained therein, and it is possible to reduce the size of a containing part, which contains the band-shaped sheet member 16, of the cartridge 10 attachable to an image forming device.

### <Second Embodiment>

Next, another embodiment of the present invention will be described. In the following description, the same reference numerals as in the foregoing embodiment are given to the same element, and a description of the same element are omitted.

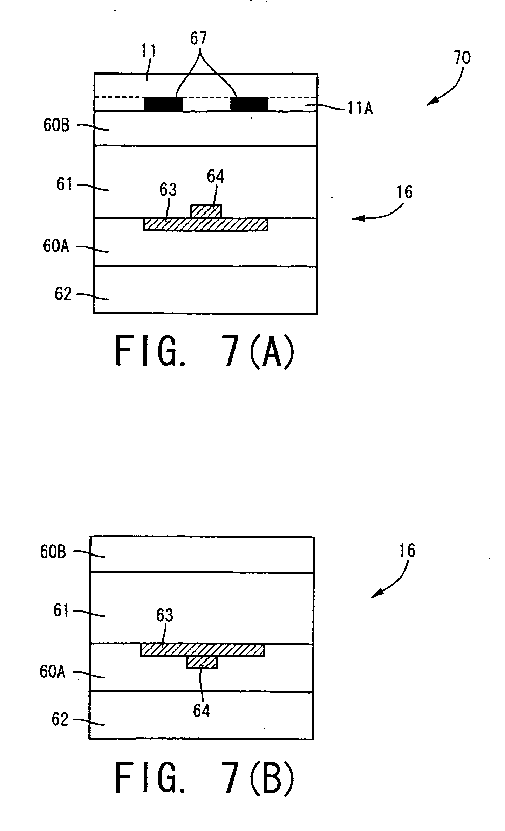

FIG. 7A is a sectional side view of a RFID label 70 using a laminate tape 11 according to another embodiment. The RFID label 70 of FIG. 7A is different from the aforementioned RFID label 70 (see FIG. 4A to FIG. 5B) only in the laminate tape 11 used to produce the RFID label 70.

The laminate tape 11 of FIG. 7A according to this embodiment is not a mere transparent film. This laminate tape 11 has a thermosensitive layer 11A that includes a color-producing reagent prepared so that a heated part can be colored by local heating in its surface to be joined to the band-shaped sheet member 16 and that is partially colored into a preset color, such as black or blue.

The thus structured laminate tape 11 is drawn from the cartridge 10, and the thermosensitive layer 11A of the laminate tape 11 is heated by the thermal head 19 on the conveying path. As a result, the heated part is partially colored, and appears as a colored part 67. Accordingly, the RFID label 70 of FIG. 7A is obtained by being joined to the band-shaped sheet member 16 in this state.

When the laminate tape 11 having the thermosensitive layer 11A is used, it becomes unnecessary to provide the ink ribbon 13, the ribbon spool 14 used to wind the ink ribbon 13, and the ribbon take-up spool 15 in the cartridge 10, and hence the structure of the inside of the cartridge 10 becomes simple. It also becomes unnecessary to provide the mechanism that rotates and drives the ribbon take-up spool 15.

Even the RFID label 70 of FIG. 7A that uses the laminate tape 11 having the thermosensitive layer 11A can have the same function as the RFID label 70 shown in FIG. 4A to FIG. 5B. Even when the surface of the RFID label 70 is unintentionally rubbed, the thermosensitive layer 11A can be prevented from being colored by the frictional heat, because the thermosensitive layer 11A is disposed inside the RFID label 70.

In the first embodiment, the adhesive layer 60B used to stick the laminate tape 11 and the band-shaped sheet member 16 together is pre-formed on the base-material tape 61. However, it is recommended to apply the adhesive layer 60B onto at least one of the laminate tape 11 and the band-shaped sheet member 16 immediately before they are stuck together.

Additionally, unless the image formed with the ink 66, the antenna conductor 63, and the IC chip 64 are damaged, it is permissible to melt either the laminate tape 11 or the band-shaped sheet member 16 with heat or ultrasonic waves so as to weld the laminate tape 11 and the band-shaped sheet member 16 together without using an adhesive layer or an adhesive (i.e., laminating agent).
Alternatively, it is permissible to dispose a welding member other than the laminate tape 11 and the band-shaped sheet member 16 therebetween and weld the laminate tape 11 and the band-shaped sheet member 16 together by melting the welding member.

The phrase "adjusting ... in a width direction" recited in Claim 3 denotes that, if the first label base material and the second label base material are equal in width, the two are arranged so as to exactly coincide with each other in the width direction, and, if the first label base material and the second label base material are not equal in width, the two are arranged so that, as a minimum, the label base material smaller in width does not protrude from the label base material greater in width. The same applies to the wording recited in Claim 7.

Additionally, in this embodiment, the laminate tape 11 and the band-shaped sheet member 16 that mutually have the same width are used. However, without being limited to this, the laminate tape 11 and the band-shaped sheet member 16 may be different in width from each other. If the laminate tape 11 and the band-shaped sheet member 16 are different in width, the laminate tape 11 and the band-shaped sheet member 16 may be arranged so that, as a minimum, the one that is smaller in width does not protrude from the other that is greater in width.

Additionally, unless an obstruction is caused to the image formation or to the conveyance of the RFID label 70 and the other elements, the laminate tape 11 and the band-shaped sheet member 16 may disagree in the width direction. In other words, it is recommended to establish a desired positional relationship between the laminate tape 11 and the band-shaped sheet member 16 in order to desirably stick these together.

The phrase "a range where an image can be formed" recited in Claim 6 denotes that, since an image cannot always be formed on the whole of the back surface of the laminate tape (first label base material) 11 on the side where the laminate tape 11 is stuck onto the band-shaped sheet member 16 (second label base material) depending on the thermal print-head (image forming means) 19 mounted in the RFID label producing device 1, no disadvantage is caused by allowing the conveying-path forming means to come into contact with a no-image formation part of the back surface when an image cannot be formed on the whole of the back surface. For example, in this embodiment, the guide roller 28A and the guide walls 28B and 28C provided in the cartridge 10 are disposed so as not to come into contact with the image formation surface of the laminate tape 11 on which an image has been formed. However, it is permissible to stabilize a tape movement by bringing the conveying members (the guide roller 28A, the guide walls 28B and 28C, etc.) into contact with the no-image formation part of the image formation surface of the laminate tape 11.

In the first embodiment, the produced RFID label 70 is structured as an electromagnetic induction type RFID label 70 by containing the antenna conductor 63 and the IC chip 64 in the band-shaped sheet member 16. However, without being limited to this, the RFID label 70 may be structured, for example, as an electrostatic coupling type, a UHF type, or an electromagnetic coupling type RFID label 70. Alternatively, the produced RFID label 70 may be structured as a microwave type RFID label 70 by containing the antenna conductor 63 and a reflection circuit. The antenna conductor 63 may be formed by printing. An upper-lower relationship between the antenna conductor 63 and the IC chip 64 may be reversed.

Additionally, in the cartridge 10 according to the first embodiment, the tape spool 12, which serves as a winding core, and the feed spool 17 are used as members supporting the laminate tape 11 and the band-shaped sheet member 16, and each tape is held by these spools. However, without being limited to this, each tape may be held by walls regulating the outer shape of the laminate tape 11 and the outer shape of the band-shaped sheet member 16.

Additionally, the laminate tape 11 and the band-shaped sheet member 16 do not need to be contained in the cartridge 10 while being rolled as shown in FIG. 6. For example, a plurality of strip-like tapes each of which includes one antenna conductor 63 and one IC chip 64 may be stacked up as shown by the solid line of FIG. 5B. If an extremely thin antenna conductor 63 and an extremely thin IC chip 64 are included, the convex parts 65A and 65B can hardly be formed, and hence an influence exerted on printing is slight. Although there is a fear that the antenna conductor 63 and the IC chip 64 will be damaged by the heat of the thermal head 19 or by pressure generated by being sandwiched between the thermal head 19 and the platen 20, the damage can be prevented by applying the present invention in this case.

Additionally, although the RFID label 70 having both the antenna conductor 63 and the IC chip 64 is produced, it is permissible to produce a label having either one of the antenna conductor 63 and the IC chip 64, and then stick the other one onto the label.

FIG. 7B is a sectional side view of a sheet member 16 used for the RFID label 70 using the laminate tape 11. The sheet member 16 of FIG. 7B is different from the aforementioned RFID label 70 (see FIG. 4A to FIG. 5B) only in that an upper-lower positional relationship between the IC chip 64 and the antenna conductor 63 interposed between the base-material tape 61 and the first adhesive layer 60A is reversed.

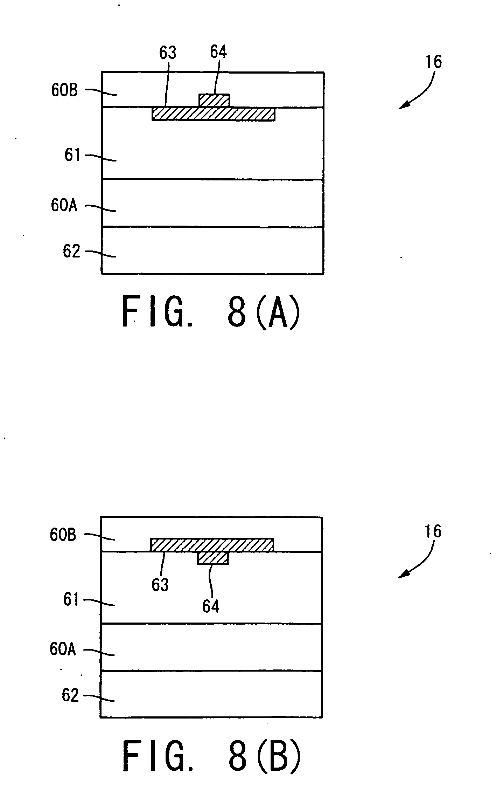

In a band-shaped sheet member 16 shown in FIG. 8A, the antenna conductor 63 and the IC chip 64 are disposed between the base-material tape 61 and the second adhesive layer 60B.

In a band-shaped sheet member 16 shown in FIG. 8B, the IC chip 64 is disposed on the opposite side of the antenna conductor 63 with respect to the band-shaped sheet member 16 of FIG. 8A.

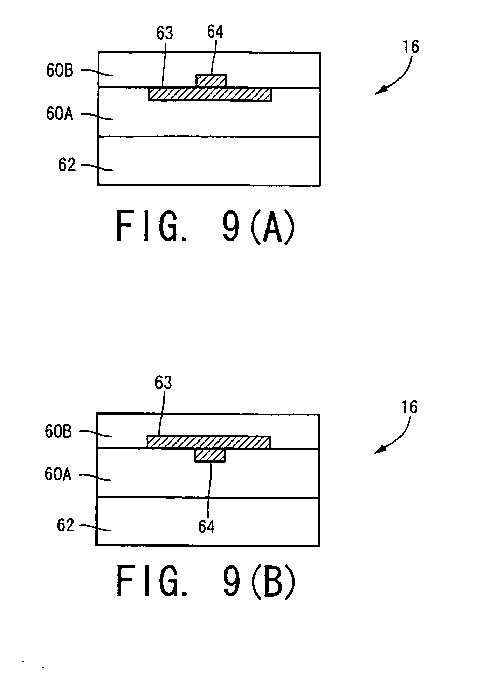

A band-shaped sheet member 16 shown in FIG. 9A consists of three layers, i.e., the separation member 62, the first adhesive layer 60A, and the second adhesive layer 60B without including the base-material tape 61, in which the antenna conductor 63 and the IC chip 64 are disposed between the first adhesive layer 60A and the second adhesive layer 60B.

In a band-shaped sheet member 16 shown in FIG. 9B, the IC chip 64 is disposed on the opposite side of the antenna conductor 63 with respect to the band-shaped sheet member 16 of FIG. 9A.

A band-shaped sheet member 16 shown in each of FIGS. 10A to 10D consists of only two layers, i.e., the separation member 62 and the adhesive layer 60. In particular, in the band-shaped sheet member 16 of FIG. 10A, the antenna conductor 63 and the IC chip 64 are disposed so that the IC chip 64 is placed on the side of the adhesive layer 60 between the separationmember 62 and the adhesive layer 60.

In the band-shaped sheet member 16 of FIG. 10B, the IC chip 64 is disposed on the opposite side of the antenna conductor 63 with respect to the band-shaped sheet member 16 of FIG. 10A.

In the band-shaped sheet member 16 of FIG. 10C, the antenna conductor 63 and the IC chip 64 are disposed so that IC chip 64 is placed on the opposite side of the separation member 62 on a surface of the adhesive layer 60 opposite the separation member 62.

In the band-shaped sheet member 16 of FIG. 10D, the IC chip 64 is disposed on the opposite side of the antenna conductor 63 with respect to the band-shaped sheet member 16 of FIG. 10C.

The same RFID label 70 as the RFID label 70 described in the first embodiment can be produced even if the thus structured band-shaped sheet member 16 is used.

In the band-shaped sheet member 16, the second adhesive layer 60B may be partially covered with the antenna conductor 63 and the IC chip 64.

In this embodiment, the band-shaped sheet member 16 is contained in the cartridge 10 attached to the RFID label producing device 1, and, when the band-shaped sheet member 16 is completely used up, a user exchanges the cartridge 10 so as to be replenished with a new band-shaped sheet member 16. However, without being limited to this structure, it is permissible to, for example, contain the band-shaped sheet member 16 in a position, which the user of the RFID label producing device 1 cannot touch, and supply a new band-shaped sheet member 16 to that position by a special service person or a similar person when the band-shaped sheet member 16 is used up.

Although the RFID label 70 having both the antenna conductor 63 and the IC chip 64 is produced in the above embodiment, it is permissible to produce a label having either one of the antenna conductor 63 and the IC chip 64, and then stick the other one onto the label. It is also permissible to construct the RFID label producing device 1 so that data can be written into or read from the IC chip 64 by a read/write device V simultaneously or almost simultaneously with image formation. Alternatively, pre-written data may be read.

Even in this case, the band-shaped sheet member 16 does not wear down by friction occurring when the band-shaped sheet member 16 slips out of place, and the band-shaped sheet member 16 can be prevented from being damaged by the generation of static electricity. When the band-shaped sheet member 16 is loaded into the RFID label producing device 1, the band-shaped sheet member 16 can be more efficiently contained.

In the aforementioned embodiment, the band-shaped sheet member 16 is contained in the cartridge 10 attached to the RFID label producing device 1. However, without being limited to this, the band-shaped sheet member 16 may be contained in the cartridge 10 attachable to an identification data writing device for writing identification data to the IC chip 64. Even in this example, a containing part in which the band-shaped sheet member 16 is contained can be made compact.

Since the separation member 62 can be separated from the first adhesive layer 60A, the second adhesive layer 60B is exposed by separating the separation member 62 from the band-shaped sheet member 16 without joining the second adhesive layer 60B and the laminate tape 11 together, and hence the band-shaped sheet member 16 can be used as a double-faced tape. Therefore, articles between which the band-shaped sheet member 16 is placed can be stuck together without applying an adhesive or a similar agent onto either the band-shaped sheet member 16 or the article whenever the band-shaped sheet member 16 is stuck onto the article.
In the sheet member 16 used for the RFID label, the adhesive layer may be partially covered with the information discriminating portion. Even in the thus structured sheet member 16, the same effect as the aforementioned sheet member used for the RFID label can be obtained.

### <Third Embodiment>

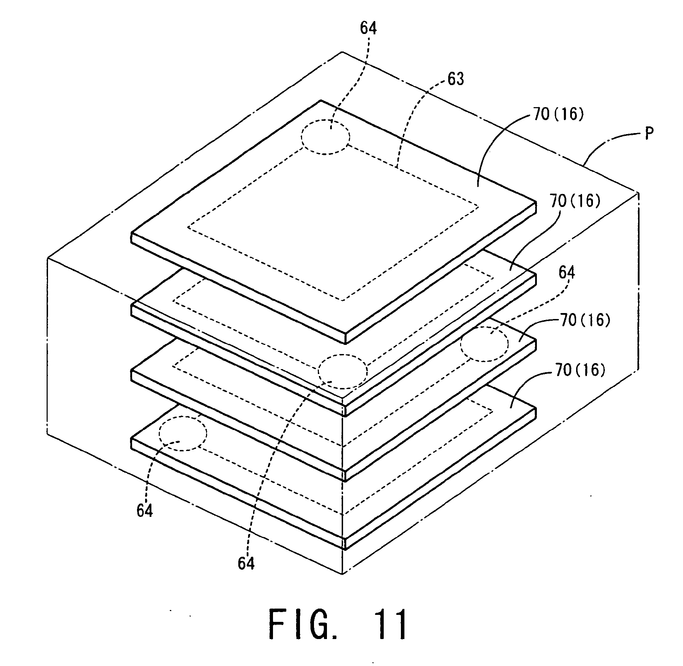

FIG. 11 shows an example in which square or rectangular sheet members 16 or RFID labels 70 are contained in a box P, which is a wrapper, shown by the alternate long and short dash line, for example, to sell the band-shaped sheet members 16 as a single item. In this example, the band-shaped sheet members 16 are conveyed while each tape is peeled off so as to sequentially produce the RFID labels 70. Even in this example, an image printed on the RFID label 70 can be kept in an excellent state without damaging the IC chip 64 and the other elements included in the RFID label 70.

Since the IC chips 64 are disposed so as not to coincide with each other in the plane direction between the sheet members 16 or the RFID labels 70 adjoining in the thickness direction, the box P can be made smaller, or, if the size of the box P is fixed, more sheet members 16 or more RFID labels 70 can be contained therein.

### <Fourth Embodiment>

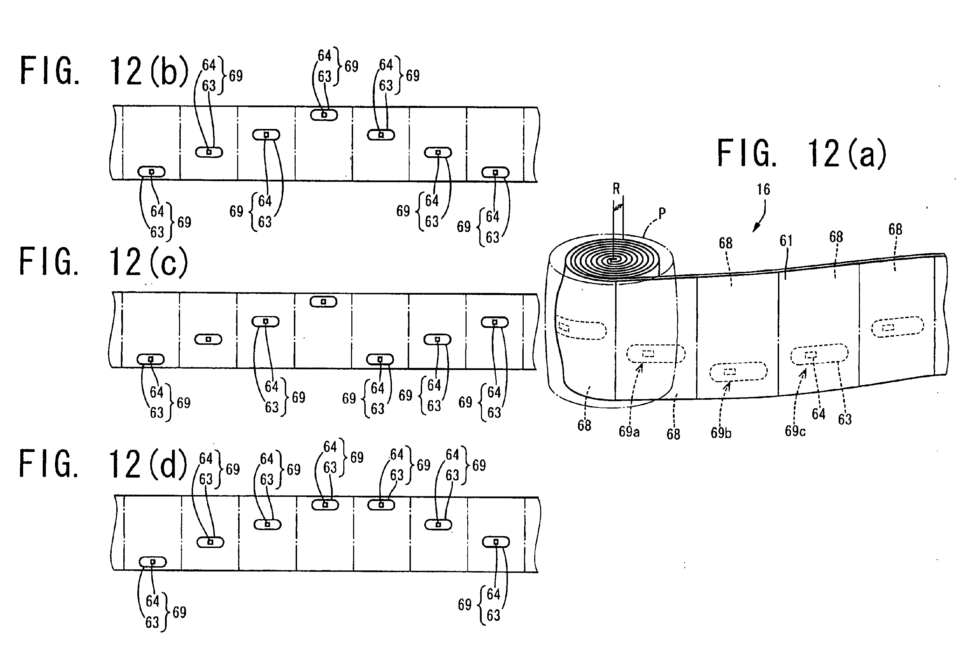

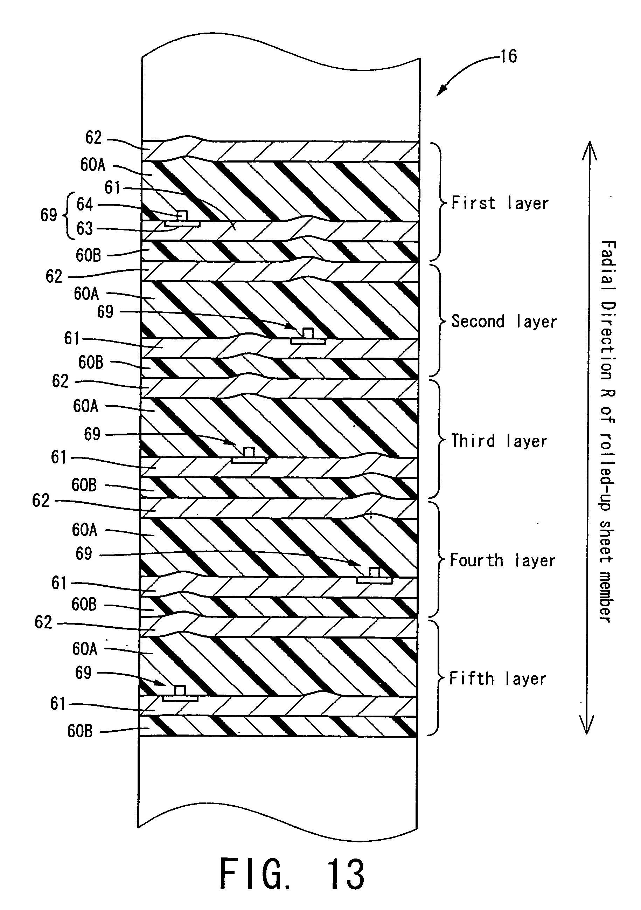

FIG. 12A is an explanatory drawing for explaining the details of a band-shaped sheet member 16 according to another embodiment of the present invention, and FIG. 13 is a sectional view of the band-shaped sheet member 16 wound like a roll so as to be in layers in the thickness direction, i.e., in the radial direction of the roll. In FIG. 12A, an RFID chip 64, which is a RFID element, and a long antenna conductor 63 parallel to a band-shaped base-material tape 61 in the longitudinal direction are disposed as one label unit on the base-material tape 61. The RFID chip 64 and the antenna conductor 63 are embedded in the base-material tape 61 by allowing a separation member 62 to be joined from above the base-material tape 61 with a first adhesive layer 60A between the separation member 62 and the base-material tape 61. Thus, labels 68 each of which has one information discriminating portion 69 serving as a responder consisting of the antenna conductor 63 and the RFID chip 64 are produced. The band-shaped sheet member 16 is formed by continuously arranging the labels 68 in the longitudinal direction.

The RFID chip 64 and the RFID antenna conductor 63 are connected together by a connecting portion (not shown) so that the information discriminating portion 69 fulfills a predetermined RFID function.

The sheet member 16 is an aggregation of band-shaped labels as a whole formed by arranging a plurality of labels 68 each of which has the information discriminating portion 69 in the longitudinal direction of the base-material tape 61.

Both sides of the separation member 62 undergo silicon processing, so that the separation member 62 is separable from the second adhesive layer 60B adjoining thereto, and is also separable from the first adhesive layer 60A in the same stack of layers. Therefore, the band-shaped sheet member 16 being in a wound state can be appropriately unrolled while drawing an end thereof.

The information discriminating portions 69 each of which is included in the label 68 are arranged in the longitudinal direction of the extended band-shaped sheet member 16, i.e., in the rightward and leftward directions of FIG. 12A, and the information discriminating portions 69a, 69b, and 69c adjoining in the longitudinal direction are in a non-aligned state in a direction perpendicular to the longitudinal direction of the band-shaped sheet member 16, i.e., in the width direction of the band-shaped sheet member 16, i.e., in the upward and downward directions of FIG. 12A. In other words, the information discriminating portions 69 are dispersed in the width direction by being disposed at different positions in the width direction. Since the adjoining information discriminating portions 69a, 69b, and 69c are arranged in a non-aligned manner in a state of being extended on one plane in the direction perpendicular to the longitudinal direction of the band-shaped sheet member 16, the information discriminating portions 69 adjoining in the thickness direction, in particular, the RFID chips 64 each of which has a greater thickness, are rarely overlapped with each other in a direction R, which is one radial direction of the roll of the rolledband-shaped sheet member 16, or in a direction in which the sheets of the label base materials are stacked up when the band-shaped sheet member 16 is wound like a roll, or when the band-shaped sheet member 16 is cut along the alternate long and short dash line for each label 68 into sheets of RFID label base materials, and these sheets of RFID label base materials are stacked up. Therefore, a widthwise part of the band-shaped sheet member 16 never greatly protrudes from the rolled band-shaped sheet member 16 because of the information discriminating portions 69. Therefore, the radius R of the rolled band-shaped sheet member 16 can be made as small as possible, and, as a result, a spatial advantage can be obtained when the band-shaped sheet member 16 is contained in the cartridge 10, in the RFID label producing device 1, and in the box P used as a wrapper.

The reason is that, even if a plurality of information discriminating portions 69 are disposed in one cross-sectional plane perpendicular to an axis X in the longitudinal direction of the band-shaped sheet member 16, the information discriminating portions 69 are dispersed in the width direction of the band-shaped sheet member 16, and hence the radius of the rolled-up sheet member 16 does not easily become large.

Additionally, when the first and second adhesive layers 60A and 60B are brought into contact with a part swollen from the information discriminating portion 69 and are pressed in accordance with the winding of the band-shaped sheet member 16, the adhesive layers 60A and 60B are compressed to somewhat absorb the swell, because the first and second adhesive layers 60A and 60B are elastic. In other words, in the band-shaped sheet member 16 wound to be in layers, the layers are in close contact with each other, and hence the radius of the rolled-up sheet member 16 does not easily become large by cooperation between the widthwise dispersion of the information discriminating portions 69 and the elasticity of the first and second adhesive layers 60A and 60B.

Additionally, when the band-shaped sheet member 16 is cut for each label 68 into rectangular or square sheets of RFID label base materials, and the sheets of RFID label base materials are stacked up, the thickness of the whole of the sheets of RFID label base materials stacked up can be reduced by arranging the information discriminating portions 69 in a non-aligned state.

The first and second adhesive layers 60A and 60B do not always need to be compressed. Additionally, if the band-shaped sheet member 16 is wound so that a widthwise part of the band-shaped sheet member 16 remarkably swells, there is a fear that this swell will cause a warp after a label is completed. However, in this embodiment, the cause of the warp is removed.

In the longitudinal direction of the band-shaped sheet member 16 that has been extended, i.e., that has been unrolled, examples shown in FIG. 12B to FIG. 12D can be mentioned as examples of an arrangement pattern inwhich the information discriminating portions 69 are arranged with predetermined intervals in the width direction and in the longitudinal direction of the band-shaped sheet member 16, besides the arrangement pattern of FIG. 12A.

First, in the arrangement pattern of FIG. 12B, a plurality of information discriminating portions 69 are arranged such that the information discriminating portions 69 gradually approach a side edge of the band-shaped sheet member 16, and gradually recede from the side edge thereof correspondingly with the progression of the information discriminating portions 69 in the longitudinal direction of the band-shaped sheet member 16. Let us see the row of the information discriminating portions 69 from the left to the right in FIG. 12B. When one of the information discriminating portions 69 is disposed near the upper side edge of the band-shaped sheet member 16 shown in FIG. 12B, the next information discriminating portion 69 is disposed closer to the lower side edge of the band-shaped sheet member 16 than the information discriminating portion 69 disposed near the upper side edge with respect to the widthwise position of the band-shaped sheet member 16. In other words, the information discriminating portions 69 are sequentially arranged toward either one of both side edges of the band-shaped sheet member 16, the information discriminating portions 69 following the information discriminating portion disposed near the side edge are arranged to approach the opposite side edge of the band-shaped sheet member 16 with respect to the width direction of the band-shaped sheet member 16.

As in the arrangement pattern of FIG. 12B, in the arrangement pattern of FIG. 12C, when one of the information discriminating portions 69 is disposed near the upper side edge of the band-shaped sheet member 16 shown in FIG. 12C, the next information discriminating portion 69 is disposed closer to the lower side edge of the band-shaped sheet member 16 than the information discriminating portion 69 disposed near the upper side edge with respect to the widthwise position of the band-shaped sheet member 16. However, when one of the information discriminating portions 69 is disposed near one of both side edges, i.e., near the upper side edge of the band-shaped sheet member 16 in FIG. 12C, the next information discriminating portion 69 is disposed near the opposite side edge, i.e., near the lower side edge of the band-shaped sheet member 16, and the information discriminating portions 69 following the next information discriminating portion are arranged to gradually approach the upper side edge of the band-shaped sheet member 16 again.

In the arrangement pattern of FIG. 12D, when one of the information discriminating portions 69 is disposed near the upper side edge of the band-shaped sheet member 16 in FIG. 12D, the next information discriminating portion 69 following this one is likewise disposed near the upper side edge, and the information discriminating portions following this next one are arranged to gradually approach the lower side edge of the band-shaped sheet member 16 in FIG. 12D.

Among the aforementioned arrangement patterns, the arrangement patterns of FIGS. 12C and 12D are preferable to the arrangement pattern of FIG. 12B, because the information discriminating portions 69 are more dispersed as a whole in the width direction of the band-shaped sheet member 16, and parts swollen by the information discriminating portions 69 are more rarely overlapped with each other in the radial direction R of the rolled-up sheet member 16.

### <Fifth Embodiment>

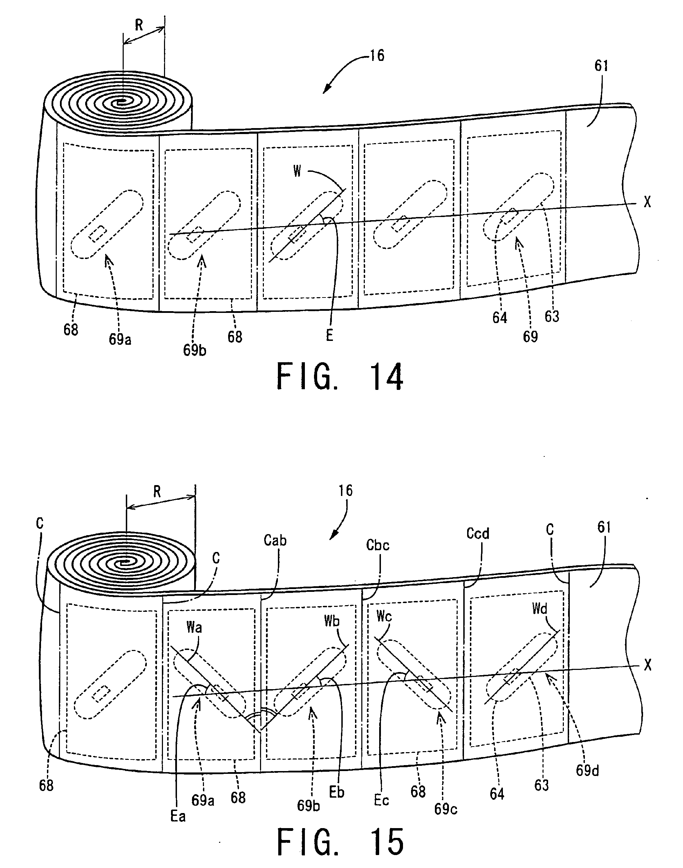

Next, three modifications of the band-shaped sheet member 16 will be described with reference to FIG. 14, FIG. 15, and FIG. 16.

In the band-shaped sheet member 16 of FIG. 14, a plurality of information discriminating portions 69 are disposed in the longitudinal direction of the band-shaped sheet member 16 unrolled as shown in FIG. 14. In the band-shaped sheet member 16 unrolled in the longitudinal direction, a center axis W extending in the longitudinal direction of each of the information discriminating portions 69a and 69b is set so as to be nonparallel to the axis X extending in the longitudinal direction of the unrolledband-shaped sheet member 16 (in rightward and leftward directions in FIG. 14), i.e., is slantingly set to make a tilt angle E with the axis X extending in the longitudinal direction of the band-shaped sheet member 16, i.e., is set so as to be nonparallel to the axis X (so as to intersect the axis X) extending in the longitudinal direction.

When the information discriminating portions 69 are arranged in this way, parts swollen by the information discriminating portions 69 are not easily overlapped with each other. Therefore, a widthwise part of the band-shaped sheet member 16 is not remarkably protruded from the band-shaped sheet member 16 wound like a roll because of the information discriminating portions 69, and the radius R of the rolled-up sheet member 16 can be made as small as possible. Therefore, when the band-shaped sheet member 16 is contained in at least one of the cartridge 10, the RFID label producing device 1, and the box P used as a wrapper, a spatial advantage can be obtained. The information discriminating portions 69 may be brought into a non-aligned state in the width direction of the band-shaped sheet member 16 as in the foregoing embodiment.

In the band-shaped sheet member 16 of FIG. 15, the band-shaped sheet member 16 is unrolled and extended in the longitudinal direction, and a plurality of information discriminating portions 69 are arranged in the longitudinal direction of the band-shaped sheet member 16. Center axes Wa and Wb extending in the longitudinal direction of the adjoining information discriminating portions 69a and 69b, i.e., of the antenna conductors 63 are set so as to be nonparallel to the axis X (so as to intersect the axis X) extending in the longitudinal direction of the extended band-shaped sheet member 16 (in rightward and leftward directions in FIG. 15), and are set axisymmetrically (angle Ea = angle Eb) with respect to a center axis Cab between the adjoining information discriminating portions 69a and 69b. Likewise, the adjoining information discriminating portions 69b and 69c are disposed so as to be nonparallel to the axis X in the longitudinal directionof the extended band-shaped sheet member 16, and are disposed axisymmetrically (angle Eb = angle Ec) with respect to a center axis between the adjoining information discriminating portions.

As a result of arranging the information discriminating portions 69 in this way, parts swollen by the information discriminating portions 69 are not easily overlapped with each other as in the foregoing example. Therefore, a widthwise part of the band-shaped sheet member 16 is not remarkably protruded from the band-shaped sheet member 16 wound like a roll because of the information discriminating portions 69, and the radius R of the rolled-up sheet member 16 can be made as small as possible. Therefore, when the band-shaped sheet member 16 is contained in at least one of the cartridge 10, the RFID label producing device 1, and the box P used as a wrapper, a spatial advantage can be obtained.

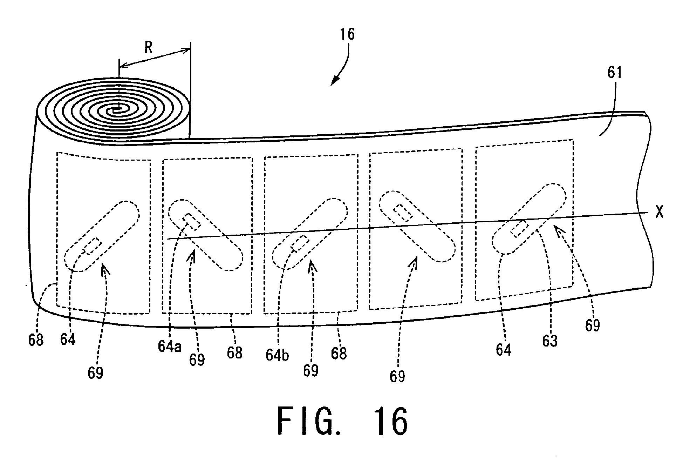

In the band-shaped sheet member 16 of FIG. 16, the band-shaped sheetmember 16 is unrolled and extended in the longitudinal direction, and a plurality of information discriminating portions 69 are arranged in the longitudinal direction of the band-shaped sheet member 16. AsinFIG. 15, adjoining RFID chips 64 a and 64b are deviated from a direction perpendicular to the axis X extending in the longitudinal direction of the sheet member 16 (rightward and leftward directions in FIG. 16), i.e., are deviated from the width direction of the band-shaped sheet member 16, and are alternately disposed with respect to a substantially central axis in the width direction. When the RFID chips 64 are deviated from the direction perpendicular to the longitudinal direction of the sheet member 16 in this way, the RFID chips can be effectively prevented from being overlapped with each other even if the band-shaped sheet member 16 is wound like a roll. Therefore, a widthwise part of the band-shaped sheet member 16 is not remarkably protruded from the band-shaped sheet member 16 because of the information discriminating portions 69, and the radius R of the rolled-up sheet member 16 can be made small.

In the foregoing embodiment and modifications, a description has been given of an example in which the labels 68 including the information discriminating portions 69 are formed on the band-shaped base-material tape 61. However, even when a member to which substantially rectangular labels 68 each of which has a predetermined size shown by the broken line of FIG. 14 to FIG. 16 are joined by separation paper, instead of the band-shaped base-material tape 61, is used as a band-shaped sheet member, the same effect can be obtained.

### <Sixth Embodiment>

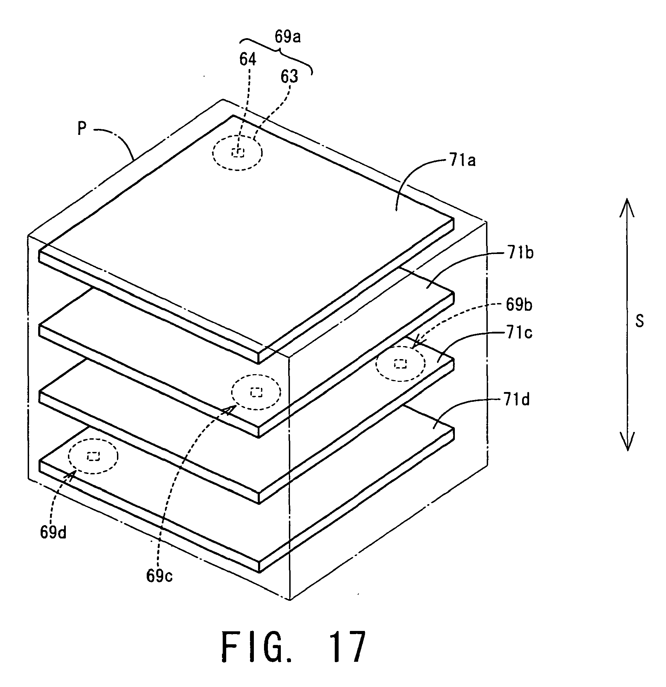

In FIG. 17, an information discriminatingportion 69 is embedded in a square holding sheet member 71 corresponding to the sheet member 16 of the RFID label 70. A plurality of holding sheet members (e.g., four holding sheet members) 71 are contained in a box P in a state of being stacked up in upward and downward directions. The holding sheet members 71a and 71b facing each other among these holding sheet members 71 are stacked up so that the positions of the information discriminating portions 69 do not coincide with each other in a plane perpendicular to a stack direction S (i.e., upward and downward directions in FIG. 17). Seeing the holding sheet members 71a and 71b stacked up from the stack direction S, the plane perpendicular to the stack direction S is a plane perpendicular to the stack direction S when planes formed by the holding sheet members 71a and 71b are stacked up.

When stacked in this way, the holding sheet members 71 have their information discriminating portions 69 disposed diagonally to each other, for example. This reduces the frequencyof overlapping the swells caused by the information discriminating portions 69 with each other in the stack direction S. Therefore, the thickness of the whole of the holding sheet members 71 stacked up is never increased by the swells caused by the information discriminating portions 69, and hence a noticeable space-saving effect can be obtained.

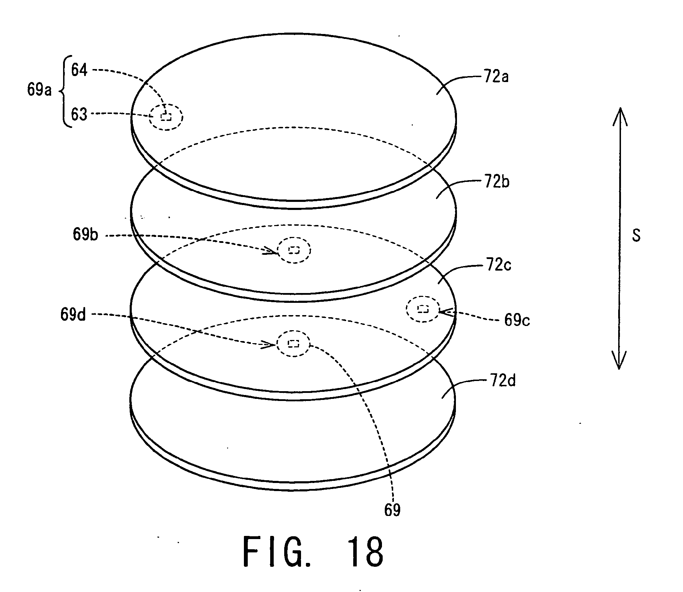

In FIG. 18, an information discriminating portion 69 is embedded in a circular holding sheet member 72 instead of the square holding sheet member 71 of FIG. 17. The circular holding sheet members 72 are stacked up in upward and downward directions S in FIG. 18. At this time, the information discriminating portions 69 of the holding sheet members 72a and 72b facing each other are disposed with intervals of 90 degrees, and hence the holding sheet members 72 are stacked up so that the positions of the information discriminating portions 69 do not coincide with each other in a plane perpendicular to the stack direction S as in the modification of FIG. 17. Therefore, since the frequency of overlapping the information discriminating portions 69 with each other in the stack direction S is decreased even when the circular holding sheet members 72 of this embodiment are stacked up, the thickness of the whole of the holding sheet members 72 stacked up is restrained from being increased by the swells caused by the information discriminating portions 69, and a noticeable space-saving effect can be obtained.

In the circular holding sheet member 72, the interval angle at which the information discriminating portions 69 are disposed is not limited to 90 degrees. An angle of 30 degrees, 45 degrees, or 120 degrees may be appropriately employed depending on the shape or size of the information discriminating portion 69.

In the holding sheet member 71 of FIG. 17 and the holding sheet member 72 of FIG. 18, the circular RFID antenna conductor 63 is used. However, instead of this, various types of antenna conductors, such as a long one as shown in FIG. 12, an elliptic one, a rectangular one, or a larger one than that of FIG. 12 can be used. Likewise, the square holding sheet member 71 or the circular holding sheet member 72 may be a rectangular or elliptic holding sheet member.

Many of the information discriminating portions 69 are not overlapped with each other in a predetermined direction in every structure mentioned above, and hence, even if excessive pressure is applied fromone direction, many of the information discriminating portions 69 will not be damaged by the pressure.

Since the RFID chip 64 has a greater thickness than the antenna conductor 63 formed by a thin film metal or by printing, a part in which the RFID chip 64 is embedded appears as the top of a swollen part in the band-shaped sheet member 16 in most cases. However, if the information discriminating portion 69 is formed by disposing the RFID chip 64 so as to come into close contact with the flat part of the antenna conductor 63, the RFID chip 64 appears as the top of a swollen part in the band-shaped sheet member 16, without being limited to a case in which the RFID chip 64 is thicker than the antenna conductor 63. In other words, in the band-shaped sheet member 16 and the holding sheets 31 and 32 according to the foregoing embodiments and the third to fifth modifications, the top of a swollen part resulting from the presence of the RFID chip 64, which is one of the members constituting the information discriminating portion 69, is properly dispersed in the width direction or other directions. Therefore, the band-shaped sheet member 16 and the holding sheets 31and 32 are formed so that the overlap of the swollen part caused by the RFID chip 64 becomes small in the radial direction of the rolled-up sheet member or in the stack direction.

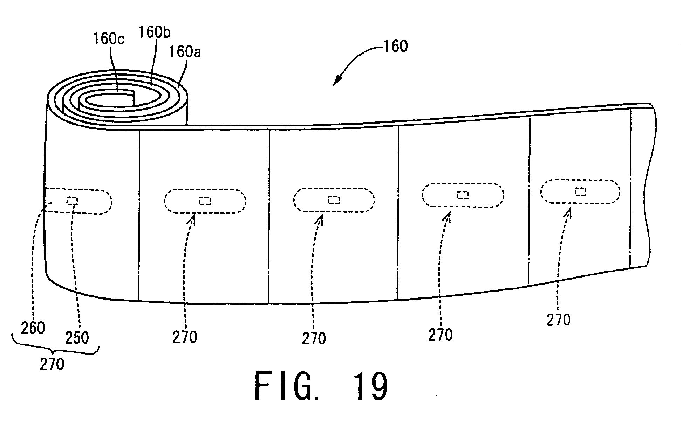

In the modifications of FIG. 14 and FIG. 15, the RFID chips 64 are arranged in a line in the longitudinal direction of the band-shaped sheet member 16 unrolled and extended. The band-shaped sheet member 16 is formed so that a swollen part resulting from the presence of the antenna conductor 63, which is one of the members constituting the information discriminating portion 69, can be appropriately dispersed when the band-shaped sheet member 16 is wound. In other words, the sheet member 16 is formed so that the overlap of a part swollen by the antenna conductor 63 in the radial direction R of the rolled-up sheet member becomes smaller by allowing the antenna conductor 63 to intersect with the longitudinal direction of the band-shaped sheet member 16 than a conventional arrangement pattern shown in FIG. 19 in which a direction in which conventional information discriminating portions 270 are arranged, the longitudinal direction of a band-shaped sheet member 160, and the longitudinal direction of the information discriminating portion 270 are made parallel to each other.

In a conventional technique, to produce the RFID label member, each information discriminating portion 270 is nipped from both sides, and is embedded in a band-shaped sheet member 160 made of, for example, paper so that the information discriminating portions 270 each of which is made up of an RFID chip 250 and a RFID antenna conductor 260 are arranged in a line in the longitudinal direction of the band-shaped sheet member 160 as shown in FIG. 19, and an image is printed directly onto the surface of the band-shaped sheet member 160 . When each band-shaped sheet member 160 is wound or rolled in order to keep a large number of band-shaped sheet members 160, the surface of the band-shaped sheet member 160 is partially swollen since the information discriminating portion 270 having a certain degree of thickness is embedded in the band-shaped sheet member 160. When this band-shaped sheet member 160 is wound, a gap occurs between adjoining layers in the radial direction of the rolled-up sheet member 160 being layers in the thickness direction of the band-shaped sheet member 160, e.g., between a first peripheral layer part 160a and a second peripheral layer part 160b shown in FIG. 13. Therefore, the radius of the roll of the rolled-up sheet member 160 becomes larger across the full width thereof than a case in which the information discriminating portion 270 is not embedded in the band-shaped sheet member 160. In particular, if the information discriminating portions 270 embedded in adjoining layers, in particular, the RFID chips 250, are disposed so as to face each other when the band-shaped sheet member 160 is wound, the roll radius will become larger than a case in which the RFID chips 250 do not face each other in the whole of the rolled-up sheet member 160.

In the structure in which the information discriminating portions 270 are arranged in a line, the information discriminating portions 270 gather at a specific position in the width direction of the band-shaped sheet member 160, and a swollen part of a layer is overlapped with a swollen part of another layer. Therefore, even if the band-shaped sheet member 160 is more tightly wound to remove a gap between the layers, the neighborhood of the information discriminating portion 270 will be only tightened. The specific part, at which the information discriminating portions 270 gather, in the width direction of the band-shaped sheet member 160 remarkably rises, and the roll radius corresponding to the specific part hardly decreases. In the conventional technique, the plane shape of the label base material to be embedded in the information discriminating portion 270 is not a long one like a band, but a rectangular, square, or circular one. Likewise, when sheets of label base materials are stacked up to keep many sheets of label base materials, the whole of the sheets of label base materials stacked up becomes larger in thickness in the stack direction than a case in which the information discriminating portion 270 is not embedded in the sheet of label base material. Therefore, the conventional technique has a problem in the fact that a large space is required to keep the RFID labels having the information discriminating portions and the band-shaped sheet member used as a material thereof or to contain these members in, for example, a cartridge.

### <Seventh Embodiment>

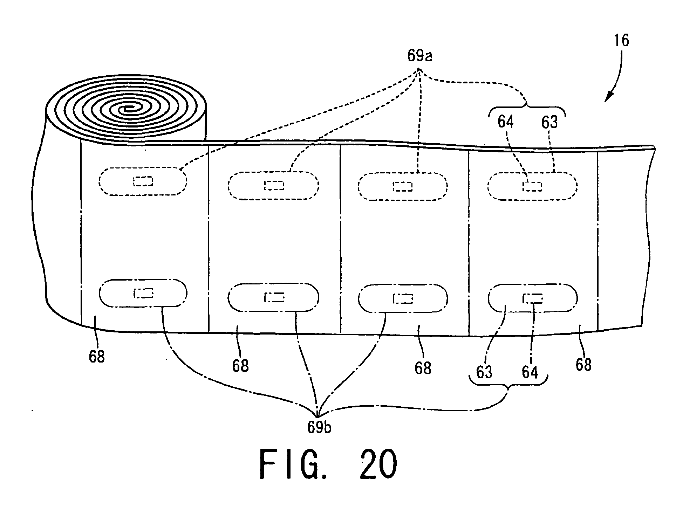

FIG. 20 is a view for explaining an embodiment according to which the information discriminating portion 69 of the band-shaped sheet member 16 is reliably prevented from being damaged.

In FIG. 20, the RFID chip 64, which is a RFID element, and the long RFID antenna conductor 63 are embedded as one label unit in the band-shaped base-material tape 61. The label 68 having the information discriminating portion 69 is formed by being cut along the alternate long and short dash line of FIG. 20. A plurality of labels 68 each of which has the information discriminating portion 69 can be formed in the longitudinal direction of the base-material tape 61, i.e., in the rightward and leftward directions of FIG. 20, and the whole thereof is the band-shaped sheet member 16 of the present invention.

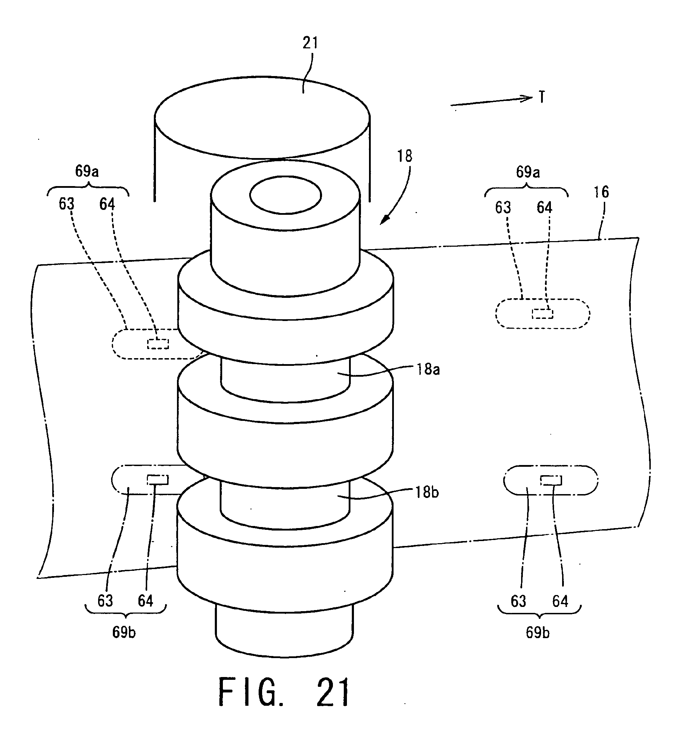

In the RFID label producing device 1, when the band-shaped sheet member 16 wound like a roll is used, a part of the band-shaped sheet member 16 is protruded from the band-shaped sheet member 16 because of the thickness of both the RFID chip 64 and the RFID antenna conductor 63 of the information discriminating portion 69, and, as a result, a swell is formed. As shown in FIG. 21, a plurality of annular concave grooves, i.e., two concave parts 18a and 18b in this embodiment, serving as pressure-absorbing means for absorbing a force pressing against the information discriminating portion 69 by partially reducing the diameter are formed at positions, which face the swells, of the roller surface (i.e., the outer peripheral surface) of a tape feed roller 18 that functions as a carrier roller.

The width of each of the concave parts 18a and 18b, i.e., the width dimension of the annular concave groove is greater than the width dimension of the information discriminating portion 69 in a direction perpendicular to a direction in which the information discriminating portion 69 is conveyed, i.e., in the upward and downward directions in FIG. 20. If the RFID antenna conductor 63 is formed like a thin film by printing, the width of each of the concave parts 18a and 18b may be smaller than the width of the RFID antenna conductor 63 as long as the width of each of the concave parts 18a and 18b is greater than the width of the RFID chip 64.

The use of the tape feed roller 18 having the concave parts 18a and 18b formed in the roller surface makes it possible to absorb an excessive force pressing against the information storage part 69 embedded in the band-shaped sheet member 16 when the band-shaped sheet member 16 is sandwiched between the tape feed roller 18 and the feed roller 21 while being conveyed, and makes it possible to reliably prevent identification data used as pieces of information from being lost or reliably prevent the information discriminating portion 69 from being destroyed by a deterioration in the RFID chip 64 resulting from the excessive pressing force against the RFID chip 64.

Additionally, the information discriminating portion 69 is prevented from not fulfilling a predetermined RFID function as a result of the destruction of a connecting portion between the RFID chip 64 and the RFID antenna conductor 63 by the pressure against the information discriminating portion 69.

It is recommended to form the concave parts 18a and 18b so as to have a depth proportional to the height of a swollen part generated by the thickness of the RFID chip 64 or the thickness of the RFID antenna conductor 63 of the information discriminating portion 69. That is, the width dimension or the depth dimension is determined so that the roller surface functioning as the bottom of each of the concave parts 18a and 18b does not exert an excessive pressing force on the information discriminating portion 69. The amount of the hollow of each of the concave parts 18a and 18b may be determined so that a pressing force is not exerted on the information discriminating portion 69 by keeping the information discriminating portion 69 and the roller surface apart from each other, or so that such a certain degree of pressing force as not to destroy or degrade the information discriminating portion 69 is exerted on the information discriminating portion 69 by bringing the information discriminating portion 69 and the roller surface into slight contact with each other. The reason is that the laminate tape 11 and the band-shaped sheet member 16 are appropriately stuck together by exerting such a certain degree of pressing force as not to destroy or degrade the information discriminating portion 69 thereon, or that the laminate tape 11 and the band-shaped sheet member 16 are excellently conveyed by increasing a contact area between the information discriminating portion 69 and the roller surface without keeping the two apart from each other. In many cases, in the information discriminating portion 69, the RFID chip 64 is thicker than the RFID antenna conductor 63, and the RFID chip 64 is more protruded toward the tape feed roller 18 than the RFID antenna conductor 63. Therefore, it is recommended to uniformly form the recess in accordance with the RFID chip 64. However, if the RFID chip 64 is surrounded with the RFID antenna conductor 63 that is thicker than the RFID chip 64 or that is more protruded toward the tape feed roller 18 than the RFID chip 64, the RFID antenna conductor 63 is more protruded toward the tape feed roller 18 than the RFID chip 64. If so, it is recommended to uniformly form the recess in accordance with the RFID antenna conductor 63. In other words, the recess is formed in accordance with a part that is farthest protruded toward the tape feed roller 18. There is no need to form a two-step recess.

The position where the information discriminating portion 69 shown in FIG. 20 is embedded and the position where the concave parts 18a and 18b shown in FIG. 21 are formed can be arbitrarily determined so that these positions coincide with each other.

The concave part 18a faces the information discriminating portions 69a arranged in series in the longitudinal direction of the band-shaped sheet member 16 on the upper side of the band-shaped sheet member 16 in FIG. 20 as shown by the broken line of FIG. 20, whereas the concave part 18b faces the information discriminating portions 69b arranged in series in the longitudinal direction of the band-shaped sheet member 16 on the lower side of the band-shaped sheet member 16 in FIG. 20 as shown by the alternate long and short dash line of FIG. 20. As described above, several rows of information discriminating portions 69 arranged.in the longitudinal direction of the band-shaped sheet member 16 (e.g., a row of the information discriminating portions 69a shown by the broken line in FIG. 20 and a row of the information discriminating portions 69b shown by the alternate long and short dash line in FIG. 20) are disposed so that the rows are apart from each other at different positions in the width direction of the band-shaped sheet member 16, i.e., in a direction in which the rotational axis center of the tape feed roller 18 used to convey the band-shaped sheet member 16 extends. Even if several rows of information discriminating portions 69 are embedded in the band-shaped sheet member 16 in this way, it is possible to absorb an excessive pressing force exerted on the information discriminating portions 69 embedded at positions apart from each other in the width direction of the band-shaped sheet member 16 by providing a plurality of concave parts (e.g., the concave parts 18a and 18b) with a gap therebetween in the width direction of the band-shaped sheet member 16 in accordance with the positions where the information discriminating portions 69 are embedded in the width direction of the band-shaped sheet member 16 or in accordance with the number of rows of the information discriminating portions 69 in the width direction, i.e., in accordance with the number ("2" in FIG. 20) of rows extending in the longitudinal direction of the band-shaped sheet member 16.

For example, even in a case in which the two rows, i.e., the row of information discriminating portions 69a shown by the broken line in FIG. 20 and the row of information discriminating portions 69b shown by the alternate long and short dash line in FIG. 20 are provided in the band-shaped sheet member 16 with an interval between the two rows in the width direction of the band-shaped sheet member 16 and in which the two rows of information discriminating portions 69a and 69b simultaneously pass between the tape feed roller 18 and the feed roller 21, the two concave parts 18a and 18b are formed on the entire periphery of the tape feed roller 18 in accordance with the positions of the two rows of information discriminating portions 69a and 69b in the width direction of the band-shaped sheet member 16, and excessive pressing forces exerted on the row of information discriminating portions 69a and on the row of information discriminating portions 69b can be simultaneously absorbed. Additionally, even in a case in which the two rows of information discriminating portions 69a and 69b pass between the tape feed roller 18 and the feed roller 21 not at the same time but with a time lag, i.e., even in a case in which the information discriminating portions 69a and 69b are disposed in a zigzag in the longitudinal direction of the band-shaped sheet member 16 every other information discriminating portion, the excessive pressing force exerted on the information discriminating portions 69a or on the information discriminating portions 69b can be appropriately absorbed by this tape feed roller 18. Even in a case in which the band-shaped sheet member 16 is replaced with another band-shaped sheet member 16 differing in the widthwise position where the information discriminating portion 69 is embedded, the tape feed roller 18 does not need to be replaced with another if the tape feed roller 18 has a concave part corresponding to the position of an information discriminating portion 69 of the other band-shaped sheet member 16, and the job time is reduced.

Additionally, if the information discriminating portion 69 faces only a specific part of the periphery of the tape feed roller 18 when the information discriminating portion 69 passes between the tape feed roller 18 and the feed roller 21, there is no need to form the concave parts 18a and 18b on the entire periphery of the tape feed roller 18. However, an excessive pressing force exerted on the information discriminating portions 69 can be appropriately absorbed by forming the concave parts 18a and 18b on the entire periphery of the tape feed roller 18 even when a deviation in the conveyance of the band-shaped sheet member 16 occurs or even when intervals with which the information discriminating portions 69 are arranged in the longitudinal direction of the band-shaped sheet member 16 are not fixed. Preferably, the number of rows of information discriminating portions 69 arranged in the longitudinal direction of the band-shaped sheet member 16 is two or more, without being limited to two.

### <Eighth Embodiment>

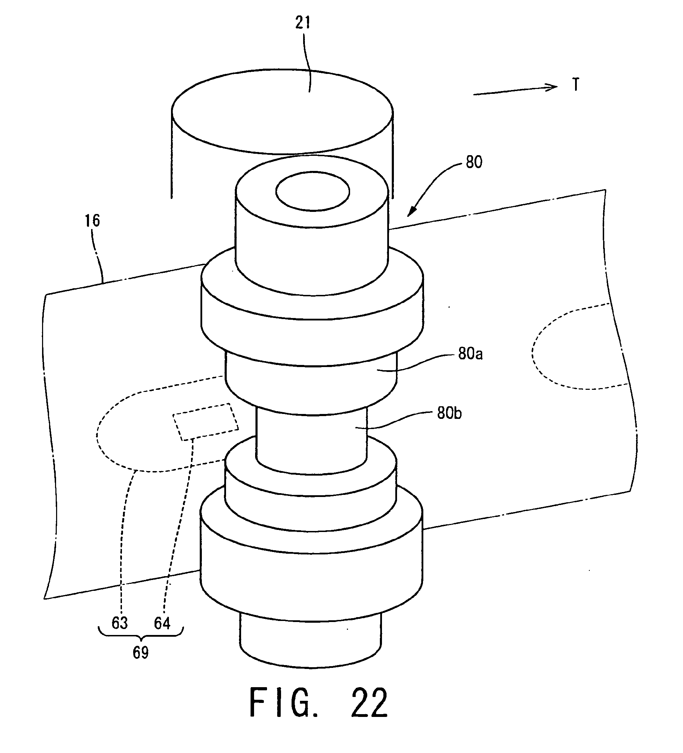

Referring now to FIG. 22, a tape feed roller 80 that is a carrier roller according to another embodiment will be described.

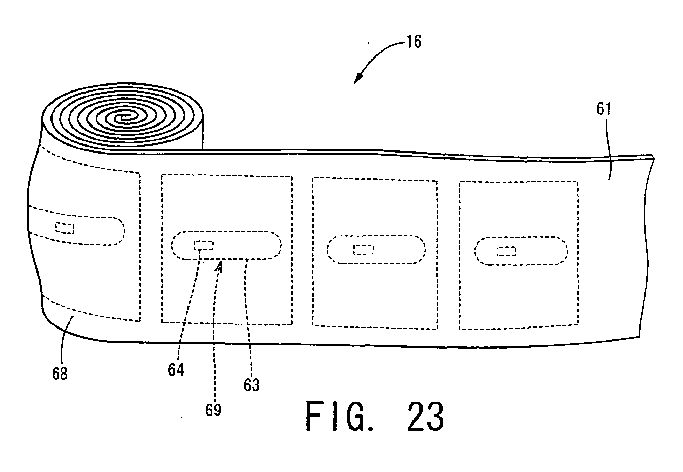

In FIG. 22, a first concave part 80a is formed at a position of the tape feed roller 80 facing the RFID antenna conductors 63 that occupy the center in the width direction of the band-shaped sheet member 16 and that are arranged in the longitudinal direction thereof (see FIG. 23) by partially making the diameter of the tape feed roller 80 smaller, whereas a second concave part 80b greater in depth than the first concave part 80a is formed at a position of the tape feed roller 80 facing the RFID chips 64 by partially making the diameter of the tape feed roller 80 even smaller. In other words, two concave parts 80a separated from each other in the width direction of the band-shaped sheet member 16, i.e., in the axial direction of the tape feed roller 80 are formed in the tape feed roller 80. A two-step concave part is formed in accordance with the cross-sectional shape of the information discriminating portion 69 (i.e., the shape of a cross section perpendicular to the longitudinal direction of the band-shaped sheet member 16) by forming a concave part 80b, which is greater in the amount of a hollow (i.e., in depth) than the concave part 80a and which communicates with to the concave part 80a, between the two concave parts 80a. It is obvious that these two concave parts 80a and 80b are included in the scope of a plurality of concave parts of the present invention. Alternatively, a two-step concave part is formed in accordance with the cross-sectional shape of the information discriminating portion 69 (i.e., the shape of a cross section perpendicular to the longitudinal direction of the band-shaped sheet member 16) by forming a concave part 80a in the tape feed roller 80 and by forming a concave part 80b communicating with the circumferential surface serving as the bottom of the concave part 80a so as to become greater in the amount of a hollow (i.e., in depth) than the concave part 80a in the middle of the concave part 80a. Likewise, it is obvious that these two concave parts 80a and 80b are included in the scope of a plurality of concave parts of the present invention.

In many cases, in the information discriminating portion 69, the RFID chip 64 is thicker than the RFID antenna conductor 63, and the RFID chip 64 is more protruded toward the tape feed roller 80 than the RFID antenna conductor 63, and, accordingly, the concave part 80b is formed so as to be greater in the amount of a hollow (i.e., in depth) than the concave part 80a. Therefore, even if the RFID chip 64 is surrounded with the RFID antenna conductor 63 that is not more protruded toward the tape feed roller 80 than the RFID chip 64 or even if the RFID chip 64 is disposed on the surface of the tape feed roller 80 in the RFID antenna conductor 63, an excessive pressing force is never exerted on the RFID antenna conductor 63, and the excessive pressing force against the information discriminating portion 69 can be absorbed, because the amount of the hollow of the concave part 80b is greater than that of the concave part 80a.

Since the concave parts 80a and 80b depend on the cross section perpendicular to the longitudinal direction of the band-shaped sheet member 16, the concave parts 80a between which the concave part 80b is formed do not need to be equal to each other in the amount of a hollow, for example, if the thickness of the RFID antenna conductor 63 is not uniform. Additionally, since the hollowed part is structured as a two-step concave part without making the concave parts 80a and 80b uniform in the amount of a hollow, an extra space can be removed by forming an appropriate gap between the information discriminating portion 69 and the roller surface so as not to exert a pressing force on the information discriminating portion 69 as the amount of a hollow matched to the RFID chip 64 or to the RFID antenna conductor 63. Additionally, the laminate tape 11 and the band-shaped sheet member 16 can be excellently conveyed by appropriately sticking the laminate tape 11 and the band-shaped sheet member 16 together or by increasing a contact area between the information discriminating portion 69 and the roller surface without forming an extra gap therebetween so as to exert such a certain degree of pressing force as not to destroy or degrade the information discriminating portion 69. The number of steps can be set at three or more. The amount of the hollow of the concave parts 80a and 80b may be determined so that the roller surface comes into contact with one of the RFID chip 64 and the RFID antenna conductor 63 but does not come into contact with the other one.

According to this embodiment, an excessive pressing force exerted on the information discriminating portion 69 embedded in the band-shaped sheet member 16 can be absorbed in the same way as in the tape feed roller 18, and identification data used as pieces of information can be reliably prevented from being lost by a deterioration in the RFID chip 64 resulting from the excessive pressing force against the RFID chip 64, or the information discriminating portion 69 can be reliably prevented from being destroyed.

In this embodiment, a description has been given of a structure in which the tape feed rollers 18 and 80 have the plurality of concave parts 18a and 18b or the concave parts 80a and 80b differing in depth. However, the same effect can be obtained even by providing an elastic portion made of a cushion, such as a soft sponge, that is elastically deformed by the information discriminating portion 69, instead of the concave parts 18a and 18b.

Alternatively, it is permissible to form the concave parts 18a, 18b, 80a, and 80b and dispose a cushion inside each of the concave parts 18a, 18b, 80a, and 80b.

In the embodiment and the modifications, a description has been given of a structure in which the tape feed rollers 18 and 80 have the pressure absorbing means (the concave parts or the elastic portion). However, the loss of identification data stored in the information discriminating portion 69 can be effectively prevented, and the destruction of the information discriminating portion can be effectively prevented even by employing a structure in which the feed roller 21, which holds the band-shaped sheet member 16 having the information discriminating portion 69 together with the tape feed roller 18 or 80 in a sandwiched manner, is provided with the same pressure absorbing means (the concave parts or the elastic portion) as above.

In the concave parts 18a, 18b, 80a, and 80b, the cross section perpendicular to the longitudinal direction of the band-shaped sheet member 16 is shaped like a rectangle or is shaped by straight lines perpendicular to each other, e.g., by combining rectangles together or turning the convexity upside down. Without being limited to this, the cross section may be shaped by curves or straight lines that intersect each other at an acute angle. For example, the shape of the cross section of the hollowed part may be a triangle, a trapezoid, a semicircle, or a semi-ellipse. Additionally, sets of two-step concave parts 80a and 80b shown in FIG. 22 may be formed in the single tape feed roller 18 with a gap between the sets in the width direction of the band-shaped sheet member 16 as shown in FIG. 21.

Since the RFID label has its maximum thickness when the RFID label is outwardly discharged after completing the production thereof, the pair of rollers consisting of the carrier roller and the feed roller are disposed at a discharge portion from which the RFID label is outwardly discharged. Therefore, the effect by which the deterioration or destruction of the information discriminating portion 69 is prevented can be more greatly heightened.

In the above embodiment, a description has been given of a structure in which the band-shaped sheet member 16 having the information discriminating portion 69 is stuck onto the laminate tape 11 on which an image has been formed. However, instead of this structure, a possible structure can be proposed to form an image directly on the band-shaped sheet member 16 having the information discriminating portion 69 by a thermal printing mechanism PM serving as an image forming means. According to this structure, the band-shaped sheet member 16 having the information discriminating portion 69 is an obj ect on which an image is formed, and the band-shaped sheet member 16 is pressed against the thermal head 19 by means of the platen 20 facing the thermal head 19. The same applies to a case in which an image is printed on the surface of the band-shaped sheet member 16 after sticking the band-shaped sheet member 16 and the laminate tape 11 together. Even when an image is formed on the band-shaped sheet member 16 having the information discriminating portion 69, an excessive pressing force exerted on the information discriminating portion 69 can be absorbed by forming concave parts in the platen 20 in the same way as in the tape feed rollers 18 and 80 or by providing the platen 20 with an elastic body that is elastically deformed by the information discriminating portion 69. Therefore, the loss of identification data stored in the information discriminating portion 69 can be effectively prevented, and the destruction of the information discriminating portion can be effectively prevented.

Additionally, in the above embodiment, a description has been given of the RFID element where identification data is stored. However, as a matter of course, the present invention can be applied to an identification data writing device that has the read/write device V (see FIG. 3) for reading and writing identification data.

Although the band-shaped sheet member 16 is a single, long, continuous surface, the band-shaped sheet member 16 may be formed by placing a rectangular sheet member, such as that shown by the broken line in FIG. 23, on a separation sheet and sticking this onto the laminate tape 11.

Any one of an electrostatic coupling method, an electromagnetic coupling method, an electromagnetic induction method, a microwave method, and a UHF method can be employed as the RFID transmission system. The present invention can, of course, be embodied in various aspects in the scope not departing from the characteristics of the present invention. For example, if a guide roller by which the band-shaped sheet member 16 is bent is provided, the band-shaped sheet member 16 is pressed against the guide roller by its tension. However, as in the above example, the deterioration or destruction of the information discriminating portion 69 can be prevented by forming at least one of the concave parts 18a, 18b, 80a, and 80b in the guide roller.

According to a possible way, an image is formed on the laminate tape 11 or on the band-shaped sheet member 16 by means of an ink jet head that forms an image while discharging ink, instead of the thermal head 19. At this time, if at least one of the concave parts 18a, 18b, 80a, and 80b mentioned above is formed in the platen 20, the laminate tape 11 or the band-shaped sheet member 16 is brought into contact with the platen 20, and a position corresponding to the ink jet head is fixed. Even if the laminate tape 11 or the band-shaped sheet member 16 is partially protruded by the information discriminating portion 69 at this time, a part of the protrusion enters the concave parts 18a, 18b, 80a, and 80b. Therefore, the ink jet head never excessively approaches the image formation surface of the laminate tape 11 or the band-shaped sheet member 16.

## Claims

1. A method for producing a RFID label (23;70), the method comprising:
conveying a first label base material (11) which is transparent from a first holding portion (12) holding the first label base material;
forming an image on a surface of the first label base material during said conveying;
conveying a second label base material (16) including at least one of a RFID antenna conductor (63;260) and an IC chip (64;250) from a second holding portion (17) holding the second label base material, wherein said second label base material comprises upper and lower convex parts (65A,65B) as a result of thickening due to said RFID antenna conductor (63;260) or IC chip (64:250); and
after said forming an image step, joining the second label base material and the first label base material on which an image has been formed together,
wherein, when an image is formed on the first label base material, the image is formed on a surface of the first label base material, the surface being joined to the second label base material.

2. A RFID label (23,70) produced according to the method of Claim 1.

3. A device (1) for producing a RFID label (23,70), the device comprising:
a first holding portion (12) that holds a first label base material (11) which is transparent;
a second holding portion (17) that holds a second label base material (16) including at least one of a RFID antenna conductor (63;260) and an IC chip (64;250), wherein said second label base material comprises upper and lower convex parts (65A,65B) as a result of thickening due to said RFID antenna conductor (63;260) or IC chip (64;250);
a joining means for adjusting the first label base material and the second label base material in a width direction and joining the first and second label base materials together while conveying the first label base material and the second label base material;
a conveying-path forming means (28A, 28B and 28C) for forming a conveying path to convey the first label base material and the second label base material along mutually different paths from each of the first and second holding portions to a position at which the first label base material and the second label base material are joined together by the joining means; and
an image forming means (PM) for forming an image on one side of the first label base material on the conveying path of the first label base material formed by the conveying-path forming means;
wherein the image forming means forms an image on a surface of the first label base material, the surface being joined to the second label base material.

4. The device of Claim 3 wherein the joining means consists of a pair of rollers (18,21;80,21) between which the first label base material (11) and the second label base material (16) are sandwiched, and the first label base material and the second label base material are joined together by rotations of each of the rollers while being conveyed.

5. The device of Claim 4 wherein the first holding portion, the second holding portion, the conveying-path forming means, and one of the two rollers that constitute the joining means are disposed within a cartridge (10) detachably attached to a main body of the RFID label producing device (1).

6. The device of any one of Claims 3 to 5, wherein the conveying-path forming means (28A, 28B and 28C) forms a space so as not to come into contact with a range where an image can be formed on an image-formed side of the first label base (11) material in an area ranging from a position at which an image is formed by the image forming means (PM) on the conveying path of the first label base material to a position at which the first and second label base materials (11,16) are joined together by the joining means (18,21;80,21).

7. The device (1) of Claim 3, wherein a pressure absorbing means (18a,18b;80a,80b) for absorbing a pressing force exerted on the RFID antenna conductor or the IC chip of the second label base material is formed on a contact surface of the conveying means with which the second label base material is brought into contact.

8. The device (1) of Claim 7, wherein the conveying means comprises a pair of rollers (18,21;80,21), and the pressure absorbing means is a plurality of concave parts (18a,18b; 80a,80b) formed in a roller surface of at least one of the pair of rollers over an entire periphery of the roller.

9. The device (1) of Claim 7, wherein the conveying means comprises a pair of rollers (18,21;80,21), and the pressure absorbing means is an elastic body disposed on a roller surface of at least one of the pair of rollers, the elastic body being elastically deformable in accordance with the shape of said convex parts (65A,65B) of a sheet surface of the second label base material.

10. The device (1) of Claim 8 or Claim 9, wherein the pair of rollers (18,21;80,21) are disposed at a discharge portion from which the second label base material (16;160) is discharged outwardly.

11. The device (1) of any one of Claims 7 to 10, wherein the image forming means (PM) is a thermal head that forms an image with heat.

12. The device (1) of any one of Claims 7 to 10, wherein the image forming means is an inkjet head that forms an image by discharging ink.

13. A cartridge (10) used for producing a RFID label (23;70), the cartridge capable of being detachably attached to a RFID label producing device (1) that has an image forming means (PM) for forming an image on a surface of a label base material, the cartridge comprising:
a first holding portion (12) that holds a first label base material (11) which is transparent;
a second holding portion (17) that holds a second label base material (16) including at least one of a RFID antenna conductor (63;260) and an IC chip (64;250), wherein said second label base material comprises upper and lower convex parts (65A, 65B) as a result of thickening due to said RFID antenna conductor (63;260) or IC chip (64;250);
a joining means for adjusting the first label base material and the second label base material in a width direction and joining the first and second label base materials together in cooperation with a joining mechanism provided in the RFID label producing device while conveying the first label base material and the second label base material; and
a conveying-path forming means (28A, 28B and 28C) for forming a conveying path to convey the first label base material and the second label base material along mutually different paths from each of the first and second holding portions to a position at which the first label base material and the second label base material are joined together by the joining means;
wherein the cartridge is arranged to be mounted in a main body of the RFID label producing device such that the image forming means of the RFID label producing device (1) is disposed near the conveying path of the first label base material for forming an image on the surface of the first label base material being joined to the second label base material.

14. The cartridge of Claim 13, wherein the conveying-path forming means (28A, 28B and 28C) forms a space so as not to come into contact with a range where an image can be formed on an image-formed side of the first label base material (11) in an area ranging from a position at which an image is formed by the image forming means (PM) on the conveying path of the first label base material to the joining part.

15. The cartridge (10) of Claim 13, wherein
said second holding portion (12;17) holds said second label base material (16) in a state in which the second label base material is wound like a roll;
said conveying path conveys the first and second label base materials along mutually different paths from the holding portions to a stack position at which the first and second label base materials are stacked together;
said cartridge comprising:
an insertion hole formed in the conveying path, the insertion hole used to insert the image forming means (PM) provided on the side of the RFID label producing device; and
a roller (18;80) disposed at the stack position on the side of an end of the conveying path, the roller stacking the first and second label base materials together while conveying them in cooperation with a roller provided in the RFID label producing device,
wherein formed is a pressure absorbing means (18a,18b;80a,80b) for absorbing a pressing force exerted on the RFID antenna conductor or the IC chip of the second label base material on a roller surface of the roller.

16. The cartridge (10) of Claim 15, wherein the pressure absorbing means comprises a plurality of concave parts (18a,18b;80a,80b) formed in the roller over an entire periphery of the roller (18;80) surface of the roller.

17. The cartridge (10) of Claim 15, wherein the pressure absorbing means comprises an elastic body that is elastically deformed in accordance with the shape of a swell of a sheet surface of the second label base material.

## Patentansprüche

1. Verfahren zum Erzeugen eines RFID-Etiketts (23; 70), wobei das Verfahren Folgendes aufweist:
Vorschieben eines ersten Etikettenbasismaterials (11), das transparent ist, von einem ersten Halteabschnitt (12), der das erste Etikettenbasismaterial hält;
Erzeugen eines Bilds an einer Fläche des ersten Etikettenbasismaterials während des Vorschubs;
Vorschieben eines zweiten Etikettenbasismaterials (16) einschließlich zumindest eines RFID-Antennenleiters (63; 260) und eines IC-Chips (64; 250) von einem zweiten Halteabschnitt (17), der das zweite Etikettenbasismaterial hält, wobei das zweite Etikettenbasismaterial einen oberen und einen unteren konvexen Teil (65A, 65B) infolge einer Verdickung aufgrund des RFID-Antennenleiters (63; 260) oder des IC-Chips (64; 250) aufweist; und
Fügen des zweiten Etikettenbasismaterials und des ersten Etikettenbasismaterials aneinander, an dem ein Bild erzeugt wurde, und zwar nach dem Schritt zum Erzeugen eines Bilds,
wobei, wenn ein Bild an dem ersten Etikettenbasismaterial erzeugt wird, das Bild an einer Fläche des ersten Basismaterials erzeugt wird, wobei die Fläche an das zweite Etikettenbasismaterial gefügt wird.

2. RFID-Etikett (23, 70), das gemäß dem Verfahren nach Anspruch 1 erzeugt wird.

3. Vorrichtung (1) zum Erzeugen eines RFID-Etiketts (23, 70), wobei die Vorrichtung Folgendes aufweist:
einen ersten Halteabschnitt (12), der ein erstes Etikettenbasismaterial (11) hält, das transparent ist;
einen zweiten Halteabschnitt (17), der ein zweites Etikettenbasismaterial (16) einschließlich zumindest eines RFID-Antennenleiters (63; 260) und eines IC-Chips (64; 250) hält, wobei das zweite Etikettenbasismaterial einen oberen und einen unteren konvexen Teil (65A, 65B) infolge einer Verdickung aufgrund des RFID-Antennenleiters (63; 260) oder des IC-Chips (64; 250) aufweist;
eine Fügeeinrichtung zum Einstellen des ersten Etikettenbasismaterials und des zweiten Etikettenbasismaterials in einer Breitenrichtung und zum Fügen des ersten und des zweiten Etikettenbasismaterials aneinander, während das erste Etikettenbasismaterial und das zweite Etikettenbasismaterial vorgeschoben werden;
einer Vorschubpfaderzeugungseinrichtung (28A, 28B und 28C) zum Erzeugen eines Vorschubpfads, um das erste Etikettenbasismaterial und das zweite Etikettenbasismaterial entlang voneinander verschiedenen Pfaden von dem ersten bzw. zweiten Halteabschnitt zu einer Position vorzuschieben, an der das erste Etikettenbasismaterial und das zweite Etikettenbasismaterial durch die Fügeeinrichtung aneinander gefügt werden; und
eine Bilderzeugungseinrichtung (PM) zum Erzeugen eines Bilds an einer Seite des ersten Etikettenbasismaterials an dem Vorschubpfad des ersten Etikettenbasismaterials, der durch die Vorschubpfaderzeugungseinrichtung erzeugt wird;
wobei die Bilderzeugungseinrichtung ein Bild an einer Fläche des ersten Etikettenbasismaterials erzeugt, wobei die Fläche an dem zweiten Etikettenbasismaterial gefügt ist.

4. Vorrichtung gemäß Anspruch 3, wobei die Fügeeinrichtung aus einem Paar Walzen (18, 21; 80, 21) besteht, zwischen denen das erste Etikettenbasismaterial (11) und das zweite Etikettenbasismaterial (16) eingefasst sind, und wobei das erste Etikettenbasismaterial und das zweite Etikettenbasismaterial durch Drehen von jeder Walze aneinander gefügt werden, während sie vorgeschoben werden.

5. Vorrichtung gemäß Anspruch 4, wobei der erste Halteabschnitt, der zweite Halteabschnitt, die Vorschubpfaderzeugungseinrichtung und eine der beiden Walzen, die die Fügeeinrichtung bilden, innerhalb einer Kartusche angeordnet sind, die abnehmbar an einem Hauptkörper der RFID-Etikettenerzeugungsvorrichtung (1) angebracht ist.

6. Vorrichtung gemäß einem der Ansprüche 3 bis 5, wobei die Vorschubpfaderzeugungseinrichtung (28A, 28B und 28C) einen Raum erzeugt, um so mit einem Bereich nicht in Kontakt zu gelangen, in dem ein Bild an einer Bilderzeugungsseite des ersten Etikettenbasismaterials (11) in einer Fläche erzeugt werden kann, die von einer Position, an der ein Bild durch die Bilderzeugungseinrichtung (PM) an dem Vorschubpfad des ersten Etikettenbasismaterials erzeugt wird, bis zu einer Position reicht, an dem das erste und das zweite Etikettenbasismaterial (11, 16) durch die Fügeeinrichtung (18, 21; 80, 21) aneinander gefügt werden.

7. Vorrichtung gemäß Anspruch 3, wobei eine Druckabsorptionseinrichtung (18a, 18b; 80a, 80b) zum Absorbieren einer Druckkraft, die auf den RFID-Antennenleiter oder den IC-Chip des zweiten Etikettenbasismaterials ausgeübt wird, an einer Kontaktfläche der Vorschubeinrichtung ausgebildet ist, mit der das zweite Etikettenbasismaterial in Kontakt gebracht wird.

8. Vorrichtung gemäß Anspruch 7, wobei die Vorschubeinrichtung ein Paar Walzen (18, 21; 80, 21) aufweist, und wobei die Druckabsorptionseinrichtung viele konkave Teile (18a, 18b; 80a, 80b) darstellt, die in einer Walzenfläche von zumindest einer Walze des Paars Walzen ausgebildet sind, und zwar über einen gesamten Umfang der Walze.

9. Vorrichtung gemäß Anspruch 7, wobei die Vorschubeinrichtung ein Paar Walzen (18, 21; 80, 21) aufweist, und wobei die Druckabsorptionseinrichtung ein elastischer Körper ist, der an einer Walzenfläche von zumindest einer Walze des Paars Walzen angeordnet ist, wobei der elastische Körper gemäß der Form der konvexen Teile (65A, 65B) einer Blattfläche des zweiten Etikettenbasismaterials elastisch verformbar ist.

10. Vorrichtung (1) gemäß Anspruch 8 oder Anspruch 9, wobei das Paar Walzen (18, 21; 80, 21) an einem Auslassabschnitt angeordnet ist, von dem das zweite Etikettenbasismaterial (16; 160) nach außen ausgelassen wird.

11. Vorrichtung (1) gemäß einem der Ansprüche 7 bis 10, wobei die Bilderzeugungseinrichtung (PM) ein Thermokopf ist, der ein Bild durch Wärme erzeugt.

12. Vorrichtung (1) gemäß einem der Ansprüche 7 bis 10, wobei die Bilderzeugungseinrichtung ein Tintenstrahlkopf ist, der ein Bild durch Auslassen von Tinte erzeugt.

13. Kartusche (10), die zum Erzeugen eines RFID-Etiketts (23; 70) verwendet wird, wobei die Kartusche abnehmbar an einer RFID-Etikettenerzeugungsvorrichtung (1) angebracht werden kann, die eine Bilderzeugungseinrichtung (PM) zum Erzeugen eines Bilds an einer Fläche eines Etikettenbasismaterials hat, wobei die Kartusche Folgendes aufweist:
einen ersten Halteabschnitt (12), der ein erstes Etikettenbasismaterial (11) hält, das transparent ist;
einen zweiten Halteabschnitt (17), der ein zweites Etikettenbasismaterial (16) einschließlich zumindest eines RFID-Antennenleiters (63, 260) und eines IC-Chips (64; 250) hält, wobei das zweite Etikettenbasismaterial einen oberen und einen unteren konvexen Teil (65A, 65B) infolge einer Verdickung aufgrund des RFID-Antennenleiters (63; 260) oder des IC-Chips (64; 250) aufweist;
eine Fügeeinrichtung zum Einstellen des ersten Etikettenbasismaterials und des zweiten Etikettenbasismaterials in einer Breitenrichtung und zum Fügen des ersten und des zweiten Etikettenbasismaterials aneinander in Zusammenwirkung mit einem Fügemechanismus, der in der RFID-Etikettenerzeugungsvorrichtung vorgesehen ist, während das erste Etikettenbasismaterial und das zweite Etikettenbasismaterial vorgeschoben werden; und
eine Vorschubpfaderzeugungseinrichtung (28A, 28B und 28C) zum Erzeugen eines Vorschubpfads, um das erste Etikettenbasismaterial und das zweite Etikettenbasismaterial entlang voneinander verschiedenen Pfaden von dem ersten bzw. dem zweiten Halteabschnitt zu einer Position vorzuschieben, an der das erste Etikettenbasismaterial und das zweite Etikettenbasismaterial durch die Fügeeinrichtung aneinander gefügt werden;
wobei die Kartusche so eingerichtet ist, dass sie in einen Hauptkörper der RFID-Etikettenerzeugungsvorrichtung so angebracht werden kann, dass die Bilderzeugungseinrichtung der RFID-Etikettenerzeugungsvorrichtung (1) nahe dem Vorschubpfad des ersten Etikettenbasismaterials angeordnet ist, um ein Bild an der Fläche des ersten Etikettenbasismaterials zu erzeugen, das an dem zweiten Etikettenbasismaterial gefügt ist.

14. Kartusche gemäß Anspruch 13, wobei die Vorschubpfaderzeugungseinrichtung (28A, 28B und 28C) einen Raum erzeugt, um so mit einem Bereich nicht in Kontakt zu gelangen, in dem ein Bild an einer Bilderzeugungsseite des ersten Etikettenbasismaterials (11) in einer Fläche erzeugt werden kann, die von einer Position, an der ein Bild durch die Bilderzeugungseinrichtung (PM) an dem Vorschubpfad des ersten Etikettenbasismaterials erzeugt wird, zu dem Fügeteil reicht.

15. Kartusche gemäß Anspruch 13, wobei
der zweite Halteabschnitt (12; 17) das zweite Etikettenbasismaterial (16) in einem Zustand hält, bei dem das zweite Etikettenbasismaterial wie eine Rolle gewickelt ist;
wobei der Vorschubpfad das erste und das zweite Etikettenbasismaterial entlang voneinander verschiedenen Pfaden von den Halteabschnitten zu einer Stapelposition vorschiebt, an der das erste und das zweite Etikettenbasismaterial aneinander gestapelt werden;
wobei die Kartusche Folgendes aufweist:
ein Einfügungsloch, das in dem Vorschubpfad erzeugt ist, wobei das Einfügungsloch zum Einfügen der Bilderzeugungseinrichtung (PM) verwendet wird, die an der Seite der RFID-Etikettenerzeugungsvorrichtung vorgesehen ist; und
eine Walze (18; 80), die an der Stapelposition an der Seite von einem Ende des Vorschubpfads angeordnet ist, wobei die Walze das erste und das zweite Etikettenbasismaterial aneinander stapelt, während sie diese in Zusammenwirkung mit einer Walze vorschiebt, die in der RFID-Etikettenerzeugungsvorrichtung vorgesehen ist,
wobei eine Druckabsorptionseinrichtung (18a, 18b; 80a, 80b) zum Absorbieren einer Druckkraft ausgebildet ist, die auf den RFID-Antennenleiter oder den IC-Chip des zweiten Etikettenbasismaterials ausgeübt wird, und zwar an einer Walzenfläche der Walze.

16. Kartusche (10) gemäß Anspruch 15, wobei die Druckabsorptionseinrichtung viele konkave Teile (18a, 18b; 80a, 80b) aufweist, die in der Walze über einen gesamten Umfang der Walzenfläche der Walze (18; 80) ausgebildet sind.

17. Kartusche (10) gemäß Anspruch 15, wobei die Druckabsorptionseinrichtung einen elastischen Körper aufweist, der gemäß der Form einer Verwölbung einer Blattfläche des zweiten Etikettenbasismaterials elastisch verformt wird.

## Revendications

1. Procédé de fabrication d'une étiquette RFID (23 ; 70), le procédé comprenant le fait :
de transporter un premier matériau de base d'étiquette (11) qui est transparent depuis une première partie de support (12) supportant le premier matériau de base d'étiquette ;
de former une image sur une surface du premier matériau de base d'étiquette durant ledit transport ;
de transporter un deuxième matériau de base d'étiquette (16) comportant au moins l'un/l'une d'un conducteur d'antenne RFID (63 ; 260) et d'une puce à circuit intégré (64 ; 250) depuis une deuxième partie de support (17) supportant le deuxième matériau de base d'étiquette, où ledit deuxième matériau de base d'étiquette comprend des parties convexes supérieure et inférieure (65A, 65B) résultant d'un épaississement dû audit conducteur d'antenne RFID (63 ; 260) ou à ladite puce à circuit intégré (64 ; 250) ; et
de relier le deuxième matériau de base d'étiquette et le premier matériau de base d'étiquette sur lequel une image a été formée ensemble, après ladite étape de formation d'image,
où, lorsqu'une image est formée sur le premier matériau de base d'étiquette, l'image est formée sur une surface du premier matériau de base d'étiquette, la surface étant reliée au deuxième matériau de base d'étiquette.

2. Étiquette RFID (23, 70) fabriquée selon le procédé de la revendication 1.

3. Dispositif (1) destiné à fabriquer une étiquette RFID (23, 70), le dispositif comprenant :
une première partie de support (12) qui supporte un premier matériau de base d'étiquette (11) qui est transparent ;
une deuxième partie de support (17) qui supporte un deuxième matériau de base d'étiquette (16) comportant au moins l'un/l'une d'un conducteur d'antenne RFID (63 ; 260) et d'une puce à circuit intégré (64 ; 250), où ledit deuxième matériau de base d'étiquette comprend des parties convexes supérieure et inférieure (65A, 65B) résultant de l'épaississement dû audit conducteur d'antenne RFID (63 ; 260) ou à ladite puce à circuit intégré (64 ; 250) ;
un moyen de jonction destiné à ajuster le premier matériau de base d'étiquette et le deuxième matériau de base d'étiquette dans une direction de la largeur et à relier les premier et deuxième matériaux de base d'étiquette ensemble tout en transportant le premier matériau de base d'étiquette et le deuxième matériau de base d'étiquette ;
un moyen de formation de chemin de transport (28A, 28B et 28C) destiné à former un chemin de transport pour transporter le premier matériau de base d'étiquette et le deuxième matériau de base d'étiquette le long de chemins mutuellement différents depuis chacune des première et deuxième parties de support jusqu'à une position à laquelle le premier matériau de base d'étiquette et le deuxième matériau de base d'étiquette sont reliés ensemble par le moyen de jonction ; et
un moyen de formation d'image (PM) destiné à former une image sur un côté du premier matériau de base d'étiquette sur le chemin de transport du premier matériau de base d'étiquette formé par le moyen de formation de chemin de transport ;
où le moyen de formation d'image forme une image sur une surface du premier matériau de base d'étiquette, la surface étant reliée au deuxième matériau de base d'étiquette.

4. Dispositif de la revendication 3, dans lequel le moyen de jonction est constitué d'une paire de rouleaux (18, 21 ; 80, 21) entre lesquels le premier matériau de base d'étiquette (11) et le deuxième matériau de base d'étiquette (16) sont pris en tenaille, et le premier matériau de base d'étiquette, et le deuxième matériau de base d'étiquette sont reliés ensemble par les rotations de chacun des rouleaux lors du transport.

5. Dispositif de la revendication 4, dans lequel la première partie de support, la deuxième partie de support, le moyen de formation de chemin de transport, et l'un des deux rouleaux qui constitue le moyen de jonction sont disposés dans une cartouche (10) fixée de manière amovible à un corps principal du dispositif de fabrication d'étiquette RFID (1).

6. Dispositif de l'une quelconque des revendications 3 à 5, dans lequel le moyen de formation de chemin de transport (28A, 28B et 28C) forme un espace de manière à ne pas entrer en contact avec une plage où une image peut être formée sur un côté où est formée l'image du premier matériau de base d'étiquette (11) dans une zone allant d'une position à laquelle une image est formée par le moyen de formation d'image (PM) sur le chemin de transport du premier matériau de base d'étiquette jusqu'à une position à laquelle les premier et deuxième matériaux de base d'étiquette (11, 16) sont reliés ensemble par le moyen de jonction (18, 21 ; 80, 21).

7. Dispositif (1) de la revendication 3, dans lequel un moyen d'absorption de pression (18a, 18b ; 80a, 80b) pour absorber une force de pression exercée sur le conducteur d'antenne RFID ou sur la puce à circuit intégré du deuxième matériau de base d'étiquette est formé sur une surface de contact du moyen de transport avec lequel le deuxième matériau de base d'étiquette est mis en contact.

8. Dispositif (1) de la revendication 7, dans lequel le moyen de transport comprend une paire de rouleaux (18, 21 ; 80, 21), et le moyen d'absorption de pression est une pluralité de parties concaves (18a, 18b ; 80a, 80b) formées dans une surface de rouleau d'au moins l'un de la paire de rouleaux sur toute la périphérie du rouleau.

9. Dispositif (1) de la revendication 7, dans lequel le moyen de transport comprend une paire de rouleaux (18, 21 ; 80, 21), et le moyen d'absorption de pression est un corps élastique disposé sur une surface de rouleau d'au moins l'un de la paire de rouleaux, le corps élastique étant élastiquement déformable en fonction de la forme desdites parties convexes (65A, 65B) d'une surface de feuille du deuxième matériau de base d'étiquette.

10. Dispositif (1) de la revendication 8 ou 9, dans lequel la paire de rouleaux (18, 21 ; 80, 21) sont disposés au niveau d'une partie de décharge à partir de laquelle le deuxième matériau de base d'étiquette (16 ; 160) est déchargé vers l'extérieur.

11. Dispositif (1) de l'une quelconque des revendications 7 à 10, dans lequel le moyen de formation d'image (PM) est une tête thermique qui forme une image avec de la chaleur.

12. Dispositif (1) de l'une quelconque des revendications 7 à 10, dans lequel le moyen de formation d'image est une tête à jet d'encre qui forme une image par décharge d'encre.

13. Cartouche (10) utilisée pour fabriquer une étiquette RFID (23 ; 70), la cartouche pouvant être fixée de manière amovible à un dispositif de fabrication d'étiquette RFID (1) qui comporte un moyen de formation d'image (PM) pour former une image sur une surface d'un matériau de base d'étiquette, la cartouche comprenant :
une première partie de support (12) qui supporte un premier matériau de base d'étiquette (11) qui est transparent ;
une deuxième partie de support (17) qui supporte un deuxième matériau de base d'étiquette (16) comportant au moins l'un/l'une d'un conducteur d'antenne RFID (63 ; 260) et d'une puce à circuit intégré (64 ; 250), où ledit deuxième matériau de base d'étiquette comprend des parties convexes supérieure et inférieure (65A, 65B) résultant de l'épaississement dû audit conducteur d'antenne RFID (63 ; 260) ou à ladite puce à circuit intégré (64 ; 250) ;
un moyen de jonction destiné à ajuster le premier matériau de base d'étiquette et le deuxième matériau de base d'étiquette dans une direction de la largeur et à relier les premier et deuxième matériaux de base d'étiquette ensemble en coopération avec un mécanisme de jonction prévu dans le dispositif de fabrication d'étiquette RFID tout en transportant le premier matériau de base d'étiquette et le deuxième matériau de base d'étiquette ; et
un moyen de formation de chemin de transport (28A, 28B et 28C) destiné à former un chemin de transport pour transporter le premier matériau de base d'étiquette et le deuxième matériau de base d'étiquette le long de chemins mutuellement différents depuis chacune des première et deuxième parties de support jusqu'à une position à laquelle le premier matériau de base d'étiquette et le deuxième matériau de base d'étiquette sont reliés ensemble par le moyen de jonction ;
où la cartouche est agencée pour être montée dans un corps principal du dispositif de fabrication d'étiquette RFID de sorte que le moyen de formation d'image du dispositif de fabrication d'étiquette RFID (1) soit disposé à proximité du chemin de transport du premier matériau de base d'étiquette pour former une image sur la surface du premier matériau de base d'étiquette qui est relié au deuxième matériau de base d'étiquette.

14. Cartouche de la revendication 13, dans laquelle le moyen de formation de chemin de transport (28A, 28B et 28C) forme un espace de manière à ne pas entrer en contact avec une plage où une image peut être formée sur un côté où est formée l'image du premier matériau de base d'étiquette (11) dans une zone allant d'une position à laquelle une image est formée par le moyen de formation d'image (PM) sur le chemin de transport du premier matériau de base d'étiquette jusqu'à la partie de jonction.

15. Cartouche (10) de la revendication 13, dans laquelle
ladite deuxième partie de support (12 ; 17) supporte ledit deuxième matériau de base d'étiquette (16) dans un état dans lequel le deuxième matériau de base d'étiquette est enroulé comme un rouleau ;
ledit chemin de transport transporte les premier et deuxième matériaux de base d'étiquette le long de chemins mutuellement différents depuis les parties de support jusqu'à une position d'empilement à laquelle les premier et deuxième matériaux de base d'étiquette sont empilés ensemble ;
ladite cartouche comprenant :
un trou d'insertion formé dans le chemin de transport, le trou d'insertion étant utilisé pour insérer le moyen de formation d'image (PM) prévu sur le côté du dispositif de fabrication d'étiquette RFID ; et
un rouleau (18 ; 80) disposé à la position d'empilement sur le côté d'une extrémité du chemin de transport, le rouleau empilant les premier et deuxième matériaux de base d'étiquette ensemble tout en leur transportant en coopération avec un rouleau prévu dans le dispositif de fabrication d'étiquette RFID,
où un moyen de pression d'absorption (18a, 18b ; 80a, 80b) destiné à absorber une force de pression exercée sur le conducteur d'antenne RFID ou sur la puce à circuit intégré du deuxième matériau de base d'étiquette sur une surface de rouleau du rouleau est formé.

16. Cartouche (10) de la revendication 15, dans laquelle le moyen d'absorption de pression comprend une pluralité de parties concaves (18a, 18b ; 80a, 80b) formées dans le rouleau sur toute la périphérie de la surface de rouleau (18 ; 80) du rouleau.

17. Cartouche (10) de la revendication 15, dans laquelle le moyen d'absorption de pression comprend un corps élastique qui est élastiquement déformé en fonction de la forme d'une bosse d'une surface de feuille du deuxième matériau de base d'étiquette.
